# EUROPEAN PATENT SPECIFICATION

(11) **EP 4 049 802 B1**
(45) Date of publication and mention of the grant of the patent: **01.05.2024**
(21) Application number: 22166007.9
(22) Date of filing: 29.12.2020
(51) Int. Cl.: B25J 9/00, B25J 9/04, B25J 9/10, B25J 13/08, B25J 19/00

(54) **DRIVE STRUCTURE OF DESKTOP ROBOTIC ARM, DESKTOP ROBOTIC ARM AND ROBOT**
ANTRIEBSSTRUKTUR EINES TISCHPLATTENROBOTERARMS, TISCHPLATTENROBOTERARM UND ROBOTER
STRUCTURE D'ENTRAÎNEMENT D'UN BRAS ROBOTIQUE DE BUREAU, BRAS ROBOTIQUE DE BUREAU ET ROBOT

(30) Priority: 11.11.2020 CN 202011259842
(43) Date of publication of application: 31.08.2022
(62) Divisional of application: 20954325.5
(73) Proprietor: Shenzhen Yuejiang Technology Co., Ltd., Shenzhen, Guangdong 518055 (CN)
(72) Inventor: LIU, Zhufu, Shenzhen, Guangdong, 518000 (CN); YE, Weizhi, Shenzhen, Guangdong, 518000 (CN); LI, Yepeng, Shenzhen, Guangdong, 518000 (CN); WANG, Zhongbin, Shenzhen, Guangdong, 518000 (CN); LIU, Peichao, Shenzhen, Guangdong, 518000 (CN); WANG, Lun, Shenzhen, Guangdong, 518000 (CN); LANG, Xulin, Shenzhen, Guangdong, 518000 (CN)
(74) Representative: Ipey

(56) References cited:
- EP-A2- 0 092 358
- CN-A- 107 718 043
- CN-A- 108 908 324
- CN-A- 110 328 659
- CN-A- 110 340 910
- CN-B- 108 557 493

## Description

### TECHNICAL FIELD

The present invention relates to the technical field of desktop robotic arms, in particular to a drive structure of a desktop robotic arm, a desktop robotic arm and a robot.

### BACKGROUND

A desktop robotic arm, as a sub-category of robotic arms, consists of a base, a turntable, an upper arm, a forearm, an end, a turntable drive motor, an upper arm drive motor and a forearm drive motor. The turntable is rotatably connected to the base, the upper arm is connected to the turntable and the forearm, the forearm is connected to the end, and the end is used for the arrangement of an actuator. The turntable drive motor is used for driving the turntable to rotate relative to the base, the upper arm drive motor is used for driving the upper arm to move, and the forearm drive motor is used for driving the forearm to move. By means of the parallelogram principle, the upper arm and the forearm drive the end to move within an operation space. For example, a robotic arm and a robot are disclosed in the Chinese patent with the application number of CN201620105515.2.

At present, a desktop robotic arm is usually an educational desktop robotic arm, which can only grab a light object and bear a small load at the end, and has low requirements for control accuracy and driving power. The turntable drive motor, the upper arm drive motor and the forearm drive motor of the desktop robotic arm are usually stepping motors. However, with industrial development, in order to meet the market demand, desktop robotic arms started to develop towards industrial application, such as visual sorting, assembly line handling and other fields, which requires the desktop robotic arms to grab heavier objects and bear heavier loads. Therefore, when adopting stepping motors as the turntable drive motor, the upper arm drive motor and the forearm drive motor, the desktop robotic arm is not suitable for industrial applications in spite of the advantages of small sizes and low costs.

A CN patent application No. CN107718043 A discloses a tabletop type industrial robot including an arm assembly and a base. The arm assembly is arranged at the upper end of the base and comprises an assembly base, a first arm and a second arm. One end of the first arm is rotationally connected to the assembly base, one end of the second arm is rotationally connected to the other end of the first arm, and the other end of the second arm is rotationally connected with an installing disc.

### SUMMARY

A main objective of the present invention is to provide a drive structure of a desktop robotic arm, so as to solve the technical problems in the background art. The invention is set out in the appended set of claims.

In order to achieve the above objective, the present invention provides a drive structure of a desktop robotic arm, including a base and a turntable.

The base is internally provided with a turntable drive motor and a turntable drive shaft, the turntable drive motor is drive-connected to the turntable drive shaft, and the turntable drive shaft is drive-connected to the turntable. The turntable is provided with an upper arm drive motor and a forearm drive motor, and the turntable drive motor, the upper arm drive motor and the forearm drive motor are all servo motors with absolute value encoders.

According to an embodiment, the base or the turntable is provided with a battery or a battery compartment electrically connected to the absolute value encoders of the upper arm drive motor and the forearm drive motor, or a terminal or a port for battery connection.

According to an embodiment, the base or the turntable is provided with a battery or a battery compartment electrically connected to the absolute value encoder of the turntable drive motor, or a terminal or a port for battery connection.

According to an embodiment, the absolute value encoders of the turntable drive motor, the upper arm drive motor and the forearm drive motor are all multi-turn absolute value encoders.

According to an embodiment, the upper arm drive motor and the forearm drive motor each include an electromagnetic contracting brake for outage braking.

According to an embodiment, the turntable drive shaft is arranged in a central area of the base, the turntable drive motor is arranged around the turntable drive shaft in a staggered manner.

The turntable includes a foundation, and the upper arm drive motor and the forearm drive motor are arranged on a back side of the foundation.

Further, a turntable deceleration assembly is provided, and the turntable drive motor is drive-connected to the turntable drive shaft through the turntable deceleration assembly;
an upper arm deceleration assembly is provided, and the upper arm deceleration assembly is drive-connected to the upper arm drive motor; and
a forearm deceleration assembly is provided, and the forearm deceleration assembly is drive-connected to the forearm drive motor.

Further, the turntable deceleration assembly includes a turntable primary synchronous belt wheel and a turntable secondary synchronous belt wheel.

According to an embodiment, one end of the turntable primary synchronous belt wheel is drive-connected to the turntable drive motor, the other end is drive-connected to one end of the turntable secondary synchronous belt wheel, and the other end of the turntable secondary synchronous belt wheel is drive-connected to the turntable drive shaft.

According to an embodiment, a partition plate extending in a horizontal direction is provided in the base, the turntable primary synchronous belt wheel is arranged on a top surface of the partition plate, the turntable drive motor is arranged under a bottom surface of the partition plate, an output shaft of the turntable drive motor penetrates through the partition plate to be drive-connected to one end of the turntable primary synchronous belt wheel, and the turntable secondary synchronous belt wheel is arranged on the bottom surface of the partition plate.

Further, the turntable drive shaft is arranged on the partition plate through a thrust bearing.

Further, the partition plate is provided with a receiving cavity, the receiving cavity is provided with a receiving structure matched with a lower edge of an outer race of the thrust bearing, the thrust bearing is arranged in the receiving cavity, and the lower edge of the outer race of the thrust bearing is connected to the receiving structure; the turntable drive shaft is vertically inserted into an inner race of the thrust bearing, and the turntable drive shaft is provided with a supporting section, an inserting section and a connecting section; and the supporting section abuts against an upper edge of the inner race of the thrust bearing, the inserting section abuts against the inner race of the thrust bearing, and the connecting section is drive-connected to the turntable secondary synchronous belt wheel.

Further, the drive structure also includes:
a bearing press plate which is hollow and annular, is arranged on the thrust bearing, abuts against the outer race of the thrust bearing, and is fixedly connected to the partition plate.

Further, the turntable primary synchronous belt wheel includes a turntable primary driving wheel, a turntable primary driven wheel and a turntable primary synchronous belt, and the turntable primary driving wheel is drive-connected to the turntable primary driven wheel through the turntable primary synchronous belt; and
the turntable secondary synchronous belt wheel includes a turntable secondary driving wheel, a turntable secondary driven wheel and a turntable secondary synchronous belt, and the turntable secondary driving wheel is drive-connected to the turntable secondary driven wheel through the turntable secondary synchronous belt.

Further, the base also includes a turntable transmission shaft, and the partition plate is provided with a shaft hole through which the turntable transmission shaft passes; and the turntable transmission shaft includes a mounting sleeve, two bearings and a shaft body, the two bearings are respectively arranged at two ends of the mounting sleeve through an interference fit, the shaft body is arranged in the mounting sleeve and connected to inner races of the two bearings, one end of the shaft body is connected to the turntable primary driven wheel through the shaft hole, and the other end is connected to the turntable secondary driving wheel.

Further, the drive structure also includes:
a plurality of first set screws and a first tension mechanism;
the partition plate is provided with a plurality of first oblong holes, and the first set screws are fixedly connected to the mounting sleeve through the first oblong holes;
the first tension mechanism includes a first bracket and a first rotation bolt, the first bracket is provided with a first connecting end and a first threaded end, and the first tension mechanism is fixedly connected to the partition plate through the first connecting end; the first tension mechanism is located below the partition plate, the first rotation bolt is rotatably connected to the first threaded end, and a screw head of the first rotation bolt is arranged close to the mounting sleeve; by rotating the first rotation bolt, a position of the first rotation bolt in the horizontal direction can be adjusted, so that the screw head of the first rotation bolt abuts against the mounting sleeve; and the mounting sleeve moves along a track corresponding to the first oblong hole when pressed.

Further, the turntable secondary driven wheel is detachably connected to the connecting section, and the turntable secondary driven wheel is provided with an abutment structure, which is configured into an annular shape matched with the connecting section; when the turntable secondary driven wheel is fixedly connected to the connecting section, the abutment structure abuts against the lower edge of the inner race of the thrust bearing; and the turntable secondary driven wheel is provided with a connection structure, which is a plurality of threaded through holes, and the connecting section is provided with threaded holes matched with the plurality of threaded through holes.

Further, the drive structure also includes:
a plurality of second set screws and a second tension mechanism;
the partition plate is provided with a plurality of second oblong holes, and the second set screws are fixedly connected to the turntable drive motor through the second oblong holes;
the second tension mechanism includes a second bracket and a second rotation bolt, the second bracket is provided with a second connecting end and a second threaded end, and the second tension mechanism is fixedly connected to the partition plate through the second connecting end; the second tension mechanism is located below the partition plate, the second rotation bolt is rotatably connected to the second threaded end, and a screw head of the second rotation bolt is arranged close to the turntable drive motor; by rotating the second rotation bolt, a position of the second rotation bolt in the horizontal direction can be adjusted, so that the screw head of the second rotation bolt abuts against the turntable drive motor; and the turntable drive motor moves along a track corresponding to the second oblong hole when pressed.

Further, the upper arm drive motor and the forearm drive motor are arranged with one over the other, and the upper arm deceleration assembly and the forearm deceleration assembly are respectively located on the left and right outer sides of the foundation.

Further, the upper arm deceleration assembly also includes an upper arm transmission shaft and an upper arm drive shaft, the upper arm drive shaft is located above the upper arm transmission shaft, the upper arm primary synchronous belt wheel is located between an output shaft of the upper arm drive motor and the upper arm transmission shaft, and the upper arm secondary synchronous belt wheel is located between the upper arm transmission shaft and the upper arm drive shaft; and
the forearm deceleration assembly also includes a forearm transmission shaft and a forearm drive shaft, the forearm drive shaft is located above the forearm transmission shaft, the forearm primary synchronous belt wheel is located between an output shaft of the forearm drive motor and the forearm transmission shaft, and the forearm secondary synchronous belt wheel is located between the forearm transmission shaft and the forearm drive shaft.

Further, the absolute value encoder of the upper arm drive motor is a single-turn absolute value encoder, which includes a first annular code wheel and a first detector, the first annular code wheel is coaxially mounted on the upper arm drive shaft, and the first detector is arranged opposite to the first annular code wheel; and
the absolute value encoder of the forearm drive motor is a single-turn absolute value encoder, which includes a second annular code wheel and a second detector, the second annular code wheel is coaxially mounted on the forearm drive shaft, and the second detector is arranged opposite to the second annular code wheel.

Further, the upper arm primary synchronous belt wheel includes an upper arm primary driving wheel, an upper arm primary driven wheel and an upper arm primary synchronous belt, and the upper arm secondary synchronous belt wheel includes an upper arm secondary driving wheel, an upper arm secondary driven wheel and an upper arm secondary synchronous belt;
the upper arm primary driving wheel is arranged on the output shaft of the upper arm drive motor, the upper arm primary driven wheel is arranged on the upper arm transmission shaft, and the upper arm primary synchronous belt is arranged on the upper arm primary driving wheel and the upper arm primary driven wheel; the upper arm secondary driving wheel is arranged on the upper arm transmission shaft, the upper arm secondary driven wheel is arranged on the upper arm drive shaft, and the upper arm secondary synchronous belt is arranged on the upper arm secondary driving wheel and the upper arm secondary driven wheel;
the forearm primary synchronous belt wheel includes a forearm primary driving wheel, a forearm primary driven wheel and a forearm primary synchronous belt, and the forearm secondary synchronous belt wheel includes a forearm secondary driving wheel, a forearm secondary driven wheel and a forearm secondary synchronous belt; and
the forearm primary driving wheel is arranged on the output shaft of the forearm drive motor, the forearm primary driven wheel is arranged on the forearm transmission shaft, the forearm primary synchronous belt is arranged on the forearm primary driving wheel and the forearm primary driven wheel, the forearm secondary driving wheel is arranged on the forearm transmission shaft, the forearm secondary driven wheel is arranged on the forearm drive shaft, and the forearm secondary synchronous belt is arranged on the forearm secondary driving wheel and the forearm secondary driven wheel.

Further, the foundation includes: a base plate; and a first supporting member and a second supporting member, the first supporting member and the second supporting member are oppositely arranged on the base plate, the first supporting member is provided with a first mounting base, and the second supporting member is provided with a second mounting base.

Further, the upper arm primary driving wheel is arranged at an end of the output shaft of the upper arm drive motor to form a first empty section, between the upper arm primary driving wheel and the first mounting base, on the output shaft of the upper arm drive motor;
the forearm primary driving wheel is arranged at an end of the output shaft of the forearm drive motor to form a second empty section, between the forearm primary driving wheel and the second mounting base, on the output shaft of the forearm drive motor; and
the first mounting base protrudes to the side opposite to the second supporting member, and the second mounting base protrudes to the side opposite to the first supporting member.

Further, the upper arm transmission shaft includes a first mounting section located at its end, the upper arm secondary driving wheel is located on the first mounting section, a middle area of the upper arm primary driven wheel is provided with a first threaded through hole, and an end face of the upper arm transmission shaft is provided with a first threaded hole matched with the first threaded through hole; and
the forearm transmission shaft includes a second mounting section at its end, the forearm secondary driving wheel is located on the second mounting section, a middle area of the forearm primary driven wheel is provided with a second threaded through hole, and an end face of the forearm transmission shaft is provided with a second threaded hole matched with the second threaded through hole.

Further, the first supporting member is provided with a first through hole, a first holder arranged corresponding to the first through hole and two first bearings located on the first holder, a first bearing mounting hole is formed in the first holder, the two first bearings are arranged in the first bearing mounting hole in a spaced mode, the upper arm transmission shaft passes through the first through hole, the upper arm transmission shaft also includes a first connecting section forming an interference fit with inner races of the two first bearings, and the first connecting section is provided with a first shaft sleeve located between the two first bearings; and
the second supporting member is provided with a second through hole, a second holder arranged corresponding to the second through hole and two second bearings located on the second holder, a second bearing mounting hole is formed in the second holder, the two second bearings are arranged in the second bearing mounting hole in a spaced mode, the forearm transmission shaft passes through the second through hole, the forearm transmission shaft also includes a second connecting section forming an interference fit with inner races of the two second bearings, and the second connecting section is provided with a second shaft sleeve located between the two second bearings.

The present invention further provides a desktop robotic arm which includes the drive structure of the desktop robotic arm described above.

The present invention further provides a robot which includes the desktop robotic arm described above.

Compared with the related art, the embodiments of the present invention have the following beneficial effects.

According to the drive structure of the desktop robotic arm provided by the embodiment of the present invention, the turntable drive motor arranged in the base is drive-connected to the turntable drive shaft, the turntable drive shaft is drive-connected to the turntable, the turntable is provided with the upper arm drive motor and the forearm drive motor, and the drive motors for controlling the turntable, an upper arm and a forearm are all servo motors, for which the absolute value encoders are correspondingly configured, so that control accuracy and driving power can be improved; moreover, compared with common incremental encoders, the adopted absolute value encoders do not need a power-off memory function or to re-find the zero or a reference position after startup, and have strong anti-interference performance and high data reliability, which enables the desktop robotic arm to be suitable for industrial applications.

### BRIEF DESCRIPTION OF DRAWINGS

Fig. 1 is a structural diagram of a desktop robotic arm in the related art;
Fig. 2 is a structural diagram of a drive structure of a desktop robotic arm according to an embodiment of the present invention;
Fig. 3 is an exploded view of the drive structure of the desktop robotic arm shown in Fig. 2;
Fig. 4 is a diagram of an internal structure of a base of a drive structure of a desktop robotic arm according to the present invention;
Fig. 5 is an assembly structure diagram of a turntable drive motor, a turntable drive shaft and a turntable deceleration assembly of a drive structure of a desktop robotic arm according to the present invention;
Fig. 6 is an exploded view of a turntable drive motor, a turntable drive shaft and a turntable deceleration assembly of a drive structure of a desktop robotic arm according to the present invention;
Fig. 7 is a sectional view of a base of a drive structure of a desktop robotic arm according to the present invention;
Fig. 8 is an exploded view of a base of a drive structure of a desktop robotic arm according to the present invention;
Fig. 9 is a structural diagram of a turntable of a drive structure of a desktop robotic arm according to the present invention;
Fig. 10 is a partial sectional view of a base of a drive structure of a desktop robotic arm according to the present invention;
Fig. 11 is a partial sectional view of a base of a drive structure of a desktop robotic arm according to the present invention;
Fig. 12 is a bottom structural diagram of a base of a drive structure of a desktop robotic arm according to the present invention;
Fig. 13 is a structural diagram of a first tension mechanism of a drive structure of a desktop robotic arm according to the present invention;
Fig. 14 is an assembly structure diagram of a turntable, an upper arm and a forearm of a drive structure of a desktop robotic arm according to the present invention;
Fig. 15 is a partially enlarged view of position C in Fig. 14;
Fig. 16 is a structural diagram of part of a turntable of a drive structure of a desktop robotic arm according to the present invention;
Fig. 17 is another structural diagram of part of a turntable of a drive structure of a desktop robotic arm according to the present invention;
Fig. 18 is a structural diagram of a desktop robotic arm according to an embodiment of the present invention;
Fig. 19 is a structural diagram of the desktop robotic arm in Fig. 18 from another perspective;
Fig. 20 is an exploded view of a base of a drive structure of a desktop robotic arm according to the present invention;
Fig. 21 is an exploded view of part of a turntable of a drive structure of a desktop robotic arm according to the present invention;
Fig. 22 is another exploded view of part of a turntable of a drive structure of a desktop robotic arm according to the present invention; and
Fig. 23 is a structural diagram of a desktop robotic arm according to another embodiment of the present invention.

### DETAILED DESCRIPTION

The technical schemes in the embodiments of the present invention are clearly and completely described in the following with reference to the accompanying drawings in the embodiments of the present invention. It is obvious that the described embodiments are only some of the embodiments of the present invention instead of all the embodiments. All other embodiments obtained by those of ordinary skill in the art based on the embodiments of the present invention without inventive effort are within the scope of the present inventior as long as these remain within the scope of the appended claims.

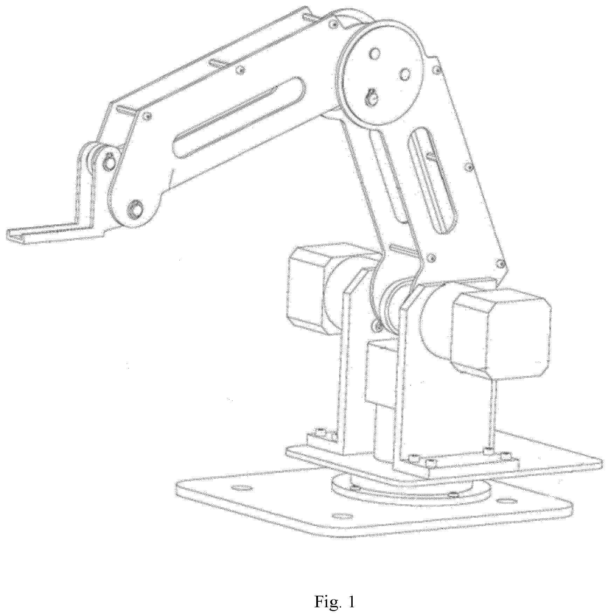

A desktop robotic arm, as a sub-category of robotic arms, consists of a base, a turntable, an upper arm, a forearm, an end, a turntable drive motor, an upper arm drive motor and a forearm drive motor. The turntable is rotatably connected to the base, the upper arm is connected to the turntable and the forearm, the forearm is connected to the end, and the end is used for the arrangement of an actuator. The turntable drive motor is used for driving the turntable to rotate relative to the base, the upper arm drive motor is used for driving the upper arm to move, and the forearm drive motor is used for driving the forearm to move. By means of the parallelogram principle, the upper arm and the forearm drive the end to move within an operation space. For example, a robotic arm and robot are disclosed in the Chinese patent with the application number of CN201620105515.2, as shown in Fig. 1.

At present, a desktop robotic arm is usually an educational desktop robotic arm, which can only grab a light object and bear a small load at the end, and has low requirements for control accuracy and driving power. The turntable drive motor, the upper arm drive motor and the forearm drive motor of the desktop robotic arm are usually stepping motors. However, with industrial development, in order to meet the market demand, desktop robotic arms started to develop towards industrial application, such as visual sorting, assembly line handling and other fields, which requires the desktop robotic arms to grab heavier objects and bear heavier loads. Therefore, when adopting stepping motors as the turntable drive motor, the upper arm drive motor and the forearm drive motor, the desktop robotic arm is not suitable for industrial applications in spite of the advantages of small size and low cost.

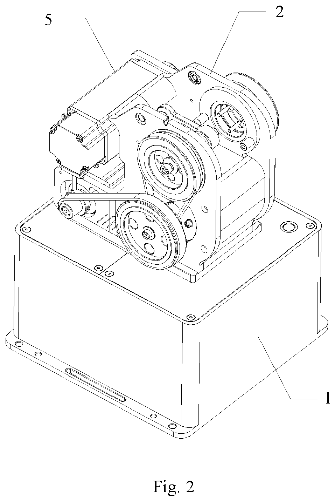

To solve the above technical problem, the present invention provides a drive structure of a desktop robotic arm. Referring to Figs. 2-4, the drive structure of the desktop robotic arm includes a base 1 and a turntable 2;
the base 1 is internally provided with a turntable drive motor 3 and a turntable drive shaft 4, the turntable drive motor 3 is drive-connected to the turntable drive shaft 4, and the turntable drive shaft 4 is drive-connected to the turntable 2; and the turntable 2 is provided with an upper arm drive motor 5 and a forearm drive motor 6, and the turntable drive motor 3, the upper arm drive motor 5 and the forearm drive motor 6 are all servo motors with absolute value encoders.

In this embodiment, the base 1 is rectangular, and the rectangular base 1 is internally provided with a receiving cavity for mounting the turntable drive motor 3 and the turntable drive shaft 4. The turntable drive motor 3, the turntable drive shaft 4 and the turntable 2 are drive-connected in sequence. The adopted drive-connected structure may be, but is not limited to, a synchronous belt deceleration assembly, a gear deceleration assembly, etc. Of course, the turntable 2 can also be directly connected to the turntable drive shaft 4 to rotate along with it. Optionally, the turntable drive shaft 4 is a hollow rotation shaft, which allows the arrangement of wires between the base 1, the upper arm drive motor 5 and the forearm drive motor 6.

In the drive structure of the desktop robotic arm, the drive motors for controlling the turntable 2, an upper arm 500 and a forearm 2000 are all servo motors, for which the absolute value encoders are correspondingly configured, so that control accuracy and driving power can be improved; moreover, compared with common incremental encoders, the adopted absolute value encoders do not need a power-off memory function or to re-find the zero or a reference position after startup, and have strong anti-interference performance and high data reliability, which enables the desktop robotic arm to be suitable for industrial applications.

In a preferred embodiment, the base 1 or the turntable 2 is provided with a battery or a battery compartment electrically connected to the absolute value encoders of the upper arm drive motor 5 and the forearm drive motor 6, or a terminal or a port for battery connection.

The base 1 or the turntable 2 is provided with a battery or a battery compartment electrically connected to the absolute value encoder of the turntable drive motor 3, or a terminal or a port for battery connection.

In this embodiment, the absolute value encoders on the upper arm drive motor 5, the forearm drive motor 6 and the turntable drive motor 3 are powered by the battery. There are various forms and structures for power supply setting. For example, the absolute value encoders are directly connected to the battery, or the absolute value encoders are electrically connected to the battery compartment, or the absolute value encoders are electrically connected to a terminal or a port, so as to be connected to the battery through the terminal or the port, as mentioned above. The on-off operation is easy.

In a preferred embodiment, the absolute value encoders of the turntable drive motor 3, the upper arm drive motor 5 and the forearm drive motor 6 are all multi-turn absolute value encoders. Further, compared with single-turn absolute value encoders, the multi-turn absolute value encoders have the advantages that installation and debugging are easy, zero finding is not needed, multi-function output can be realized, the service life is long, etc. Therefore, multi-turn absolute value encoders are preferred for the turntable drive motor 3, the upper arm drive motor 5 and the forearm drive motor 6.

In a preferred embodiment, the upper arm drive motor 5 and the forearm drive motor 6 each include an electromagnetic contracting brake for outage braking. In this embodiment, through the electromagnetic contracting brake, the upper arm drive motor 5 and the forearm drive motor 6 quickly stop for mechanical braking after a power outage, so that the upper arm and the forearm of the desktop robotic arm can be prevented from falling automatically after a power failure, thus improving safety.

In a preferred embodiment, referring to Figs. 2-4, the turntable drive shaft 4 is arranged in a central area of the base 1, the turntable drive motor 3 is arranged around the turntable drive shaft 4 in a staggered manner, and
the turntable 2 includes a foundation 21, and the upper arm drive motor 5 and the forearm drive motor 6 are arranged on a back side of the foundation 21.

In this embodiment, the turntable drive shaft 4 is located in a central area of the receiving cavity, and the turntable drive motor 3 is located around the turntable drive shaft 4 to form a staggered arrangement in the receiving cavity of the base 1. The staggered arrangement of the turntable drive shaft 4 and the turntable drive motor 3 can reduce an overall height of the desktop robotic arm, thereby reducing a center of gravity of the desktop robotic arm and further ensuring that the desktop robotic arm will not shake or roll over when grabbing heavy objects. The turntable drive motor 3 can be mounted normally or upside down, which can be decided by those of skill in the art according to the actual situation, as long as the turntable drive motor 3 and the turntable drive shaft 4 are arranged in the base 1 in a staggered mode. When the turntable drive motor 3 is installed normally, its output shaft is directed to the space above the base 1, and when the turntable drive motor 3 is mounted upside down, its output shaft is directed to the space below the base 1. Optionally, the turntable drive motor 3 proposed in the embodiment of the present invention is installed in the base 1 normally, which is only an example, not a limitation.

The turntable includes a foundation 21, a front side of the foundation 21 is provided with the upper arm 500 and the forearm 2000 for grabbing objects, and a back side of the foundation 21 is provided with the upper arm drive motor 5 and the forearm drive motor 6, so as to form a balance through the upper arm drive motor 5, the forearm drive motor 6, the upper arm 500 and the forearm 2000, and prevent the center of gravity of the desktop robotic arm from deviating from a center of the base 1, thus ensuring that the desktop robotic arm will not shake or roll over due to the deviation of the center of gravity towards a side where the upper arm 500 and the forearm 2000 are located when grabbing heavy obj ects.

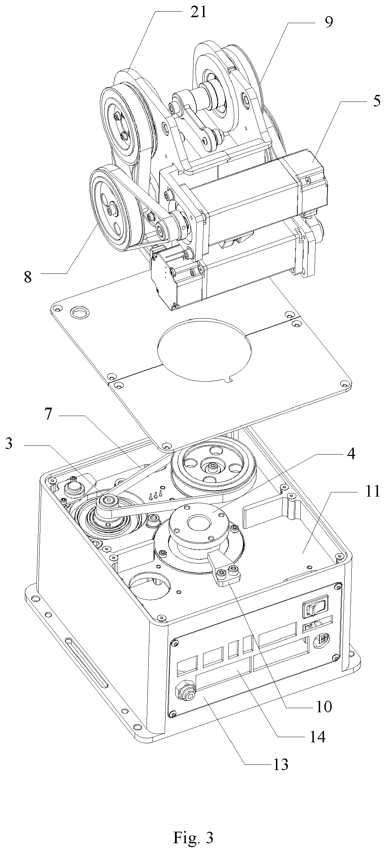

In a preferred embodiment, referring to Fig. 3, the drive structure of the desktop robotic arm further includes:
a turntable deceleration assembly 7, the turntable drive motor 3 being drive-connected to the turntable drive shaft 4 through the turntable deceleration assembly 7;
an upper arm deceleration assembly 8 drive-connected to the upper arm drive motor 5; and
a forearm deceleration assembly 9 drive-connected to the forearm drive motor 6.

In this embodiment, the turntable drive shaft 4 is decelerated by the turntable deceleration assembly 7, and the turntable deceleration assembly 7 plays a role in matching rotation speeds and transmitting torque. Specifically, torque generated by the turntable drive motor 3 will first be transmitted to the turntable deceleration assembly 7, then the turntable deceleration assembly 7 performs rotation speed matching on the transmitted torque, and then the torque after rotation speed matching will be transmitted to the turntable drive shaft 4, so that the turntable drive shaft 4 can drive the turntable 2 to rotate. Torque generated by the upper arm drive motor 5 will also be transmitted to the upper arm deceleration assembly 8 first, then the upper arm deceleration assembly 8 performs rotation speed matching on the transmitted torque, and then the torque after rotation speed matching will be transmitted to the upper arm 500 to drive the upper arm 500 to rotate. Torque generated by the forearm drive motor 6 will also be transmitted to the forearm deceleration assembly 9 first, then the forearm deceleration assembly 9 performs rotation speed matching on the transmitted torque, and then the torque after rotation speed matching will be transmitted to the forearm 2000 to drive the forearm 2000 to rotate.

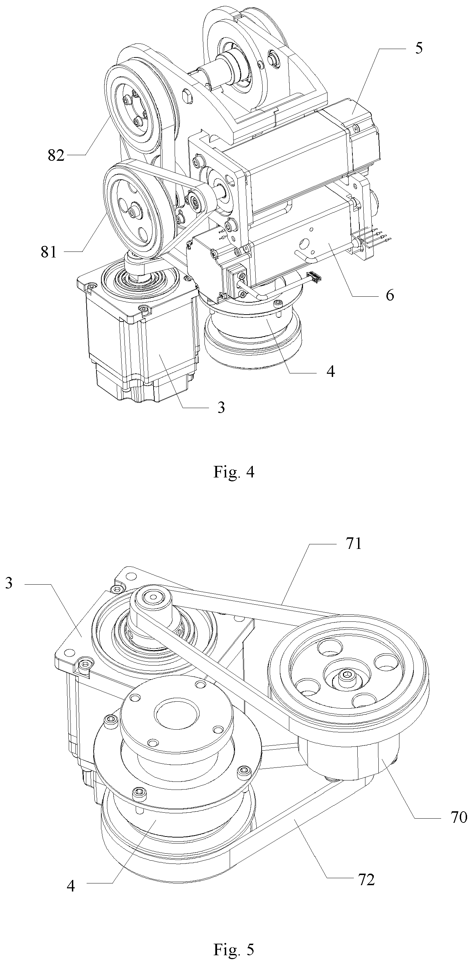

In a preferred embodiment, referring to Fig. 5, the turntable deceleration assembly 7 includes a turntable primary synchronous belt wheel 71 and a turntable secondary synchronous belt wheel 72; and one end of the turntable primary synchronous belt wheel 71 is drive-connected to the turntable drive motor 3, the other end is drive-connected to one end of the turntable secondary synchronous belt wheel 72, and the other end of the turntable secondary synchronous belt wheel 72 is drive-connected to the turntable drive shaft 4.

In this embodiment, the turntable deceleration assembly 7 includes a turntable primary synchronous belt wheel 71 and a turntable secondary synchronous belt wheel 72. The torque generated by the turntable drive motor 3 is subjected to two-stage deceleration by the turntable primary synchronous belt wheel 71 and the turntable secondary synchronous belt wheel 72 to ensure that the decelerated torque can meet the use requirements of the turntable drive shaft 4. Specifically, the torque generated by the turntable drive motor 3 is first decelerated by the turntable primary synchronous belt wheel 71, then decelerated by the turntable secondary synchronous belt wheel 72, and then transmitted to the turntable drive shaft 4, so as to drive the turntable 2 to rotate through the turntable drive shaft 4.

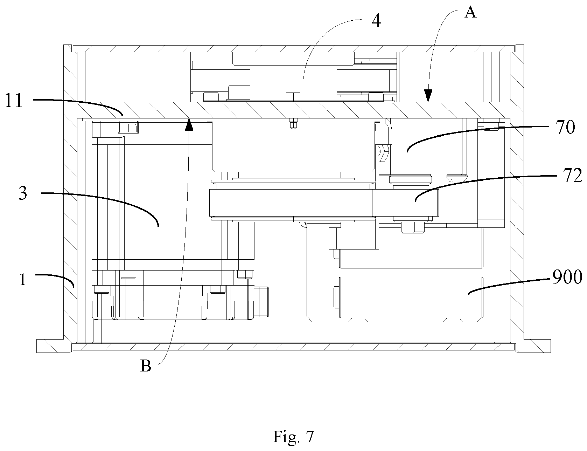

In a preferred embodiment, referring to Fig. 3 and Fig. 7, a partition plate 11 extending in a horizontal direction is arranged in the base 1, the turntable primary synchronous belt wheel 71 is arranged on a top surface of the partition plate 11, the turntable drive motor 3 is arranged under a bottom surface of the partition plate 11, an output shaft of the turntable drive motor 3 penetrates through the partition plate 11 to be drive-connected to one end of the turntable primary synchronous belt wheel 71, and the turntable secondary synchronous belt wheel 72 is arranged on the bottom surface of the partition plate 11.

In this embodiment, in this case, according to the arrangement state of the base 1, as shown in Fig. 7, A represents the top surface of the partition plate 11 and B represents the bottom surface of the partition plate 11; optionally, the partition plate 11 is horizontally arranged in the base 1 to divide an internal space of the base 1 into two spaces; optionally, a distance between the partition plate 11 and a top of the base 1 is smaller than a distance between the partition plate 11 and a bottom of the base 1; and the turntable primary synchronous belt wheel 71 is arranged on the top surface of the partition plate 11, and the turntable secondary synchronous belt wheel 72 and the turntable drive motor 3 are both arranged on the bottom surface of the partition plate 11. In this embodiment, the partition plate 11 is arranged in the base 1 to facilitate the installation of the turntable drive motor 3, the turntable primary synchronous belt wheel 71 and the turntable secondary synchronous belt wheel 72, which increases the stability of the above components. In another embodiment, the way to install the turntable drive motor 3, the turntable primary synchronous belt wheel 71 and the turntable secondary synchronous belt wheel 72 on the partition plate 11 can be that the partition plate 11 is detachably connected to the base 1, the turntable drive motor 3, the turntable primary synchronous belt wheel 71 and the turntable secondary synchronous belt wheel 72 are fixed on the partition plate 11 first, and then the partition plate 11 is fixed in the base 1.

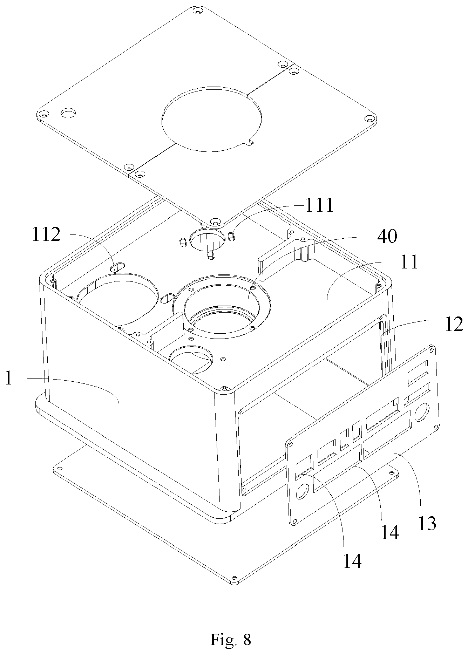

In a preferred embodiment, referring to Fig. 8, one side of the base 1 is provided with a mounting plate notch 12, the base 1 also includes a mounting plate 13, the mounting plate 13 is arranged at the mounting plate notch 12, and the mounting plate 13 is provided with a plurality of snap-fit openings 14.

In this embodiment, on one side of the base 1 is provided a mounting plate notch 12, the mounting plate notch 12 is covered by the mounting plate 13, and the mounting plate 13 is provided with a plurality of snap-fit openings 14 through which a circuit interface is installed. As the snap-fit openings 14 proposed in the embodiment of the present invention are formed in the mounting plate 13 which is detachably connected to the base 1, when the circuit interface changes, only the corresponding mounting plate 13 needs to be replaced, or the original mounting plate 13 is removed and then snap-fit openings 14 corresponding to a new circuit interface are formed in the mounting plate. In addition, the base 1 can be detached and maintained easily.

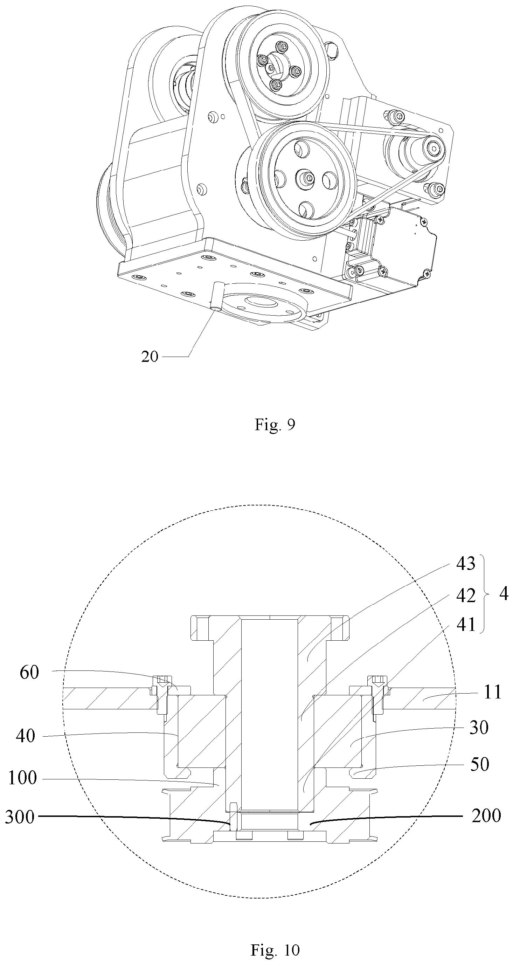

In a preferred embodiment, referring to Fig. 3 and Fig. 9, a stop plate 10 is arranged on a side, near the mounting plate 13, of the partition plate 11, and the stop plate 10 is located below the turntable 2. The turntable 2 is provided with a turntable limit post 20 for abutting against the stop plate 10, and the turntable limit post 20 is located on a side near the upper arm 500 and the forearm 2000.

In this embodiment, the turntable drive shaft 4 is a hollow shaft, and wires of the desktop robotic arm are arranged through the turntable drive shaft 4. It can be understood that one end of the wire passing through the turntable drive shaft 4 is fixed in the base 1, and the other end is fixed on the turntable 2. When the turntable drive shaft 4 drives the turntable 2 to rotate, the wire fixed on the turntable 2 will also rotate. If the turntable 2 rotates continuously in a same direction, the wire will wind up in this rotation direction, and because the wire is fixed to the base 1 and a length of the wire is limited, the wire will be broken during the continuous rotation of the turntable 2 in the same direction. Therefore, in this embodiment, the stop plate 10 for limiting a rotation angle of the turntable drive shaft 4 is arranged on the partition plate 11, the stop plate 10 is located in a circumferential direction of the turntable drive shaft 4, and the turntable drive shaft 4 or the turntable 2 is provided with the turntable limit post 20 for abutting against the stop plate 10, so as to limit the rotation angle of the turntable drive shaft 4 through an abutting fit between the turntable limit post 20 and the stop plate 10. Specifically, the stop plate 10 is located on a rear side of the turntable 2; and during the rotation of the turntable drive shaft 4, if the turntable limit post 20 makes contact with and abuts against the stop plate 10, the rotation in this direction will be stopped to avoid wire breakage.

In a preferred embodiment, the stop plate 10 includes a fixation part connected to the partition plate 11 and a limit part extending towards the turntable drive shaft 4, and two side walls of the limit part contract towards the turntable drive shaft 4.

In this embodiment, the fixation part is connected to the partition plate 11, and the limit part extending towards the turntable drive shaft 4 is connected to the fixation part, so that a rotation angle of the turntable 2 can be limited through an abutting fit between the limit part and the stop plate 10. Specifically, an end face, facing the turntable drive shaft 4, of the limit part is an arc surface, and the arc surface is matched with a circumferential arc surface of the turntable drive shaft 4 to avoid collision of the turntable drive shaft 4 during rotation. Optionally, according to the embodiment of the present invention, an included angle formed by extension lines of two side walls of the limit part is 5-60°. When the included angle is 5°, a rotation angle of the turntable drive shaft 4 is 177.5°, and when the included angle is 60°, the rotation angle of the turntable drive shaft 4 is 150°.

In a preferred embodiment, referring to Fig. 10, the turntable drive shaft 4 is arranged on the partition plate 11 through a thrust bearing 30.

In this embodiment, optionally, the turntable drive shaft 4 is arranged on the partition plate 11 through the thrust bearing 30, and the turntable deceleration assembly 7 (that is, the turntable secondary synchronous belt wheel 72) is drive-connected to the turntable 2 through the turntable drive shaft 4, so as to prevent the turntable deceleration assembly 7 from directly bearing a weight of the turntable 2, which prolongs the service life of the turntable deceleration assembly 7; that is, when an output shaft of the turntable deceleration assembly 7 is directly connected to the turntable 2, the turntable deceleration assembly 7 directly bears the weight of the turntable 2, so that the turntable deceleration assembly 7 is greatly stressed, which is equivalent to increasing a load weight of the turntable deceleration assembly 7. In this case, the turntable drive shaft 4 is optionally located at a center of the partition plate 11.

In a preferred embodiment, referring to Fig. 10, the partition plate 11 is provided with a receiving cavity 40, the receiving cavity 40 is provided with a receiving structure 50 matched with a lower edge of an outer race of the thrust bearing 30, the thrust bearing 30 is arranged in the receiving cavity 40, and the lower edge of the outer race of the thrust bearing 30 is connected to the receiving structure 50; the turntable drive shaft 4 is vertically inserted into an inner race of the thrust bearing 30, and the turntable drive shaft 4 is provided with a supporting section 41, an inserting section 42 and a connecting section 43; and the supporting section 41 abuts against an upper edge of the inner race of the thrust bearing 30, the inserting section 42 abuts against the inner race of the thrust bearing 30, and the connecting section 43 is drive-connected to the turntable secondary synchronous belt wheel 72.

In this embodiment, optionally, the center of the partition plate 11 is provided with the receiving cavity 40 where the thrust bearing 30 is installed, and a bottom of the cavity is provided with a supporting structure which can receive the lower edge of the outer race of the thrust bearing 30. In this case, the supporting structure is optionally an annular body, and after the thrust bearing 30 is installed in the receiving cavity 40, the receiving structure 50 can abut against the lower edge of the outer race of the thrust bearing 30 to receive the thrust bearing 30, and the turntable drive shaft 4 can be vertically inserted into the inner race of the thrust bearing 30. Moreover, the turntable drive shaft 4 is divided into the connecting section 43, the inserting section 42 and the supporting section 41 from bottom to top (that is, a diameter of the inserting section 42 is smaller than that of the supporting section 41, and a diameter of the connecting section 43 is optionally the same as that of the inserting section 42), the inserting section 42 can be inserted into the inner race of the thrust bearing 30, the connecting section 43 passes through the thrust bearing 30 to be drive-connected to the turntable secondary synchronous belt wheel 72, and an end, near the inserting section 42, of the supporting section 41 can abut against the upper edge of the inner race of the thrust bearing 30, so that the thrust bearing 30 can bear the weight of the turntable 2.

In a preferred embodiment, referring to Fig. 10, the drive structure of the desktop robotic arm further includes: a bearing press plate 60 which is hollow and annular, is arranged on the thrust bearing 30, abuts against the outer race of the thrust bearing 30, and is fixedly connected to the partition plate 11.

In this embodiment, optionally, the base 1 also includes the bearing press plate 60, the bearing press plate 60 is optionally an annular plate, and the bearing press plate 60 can be sleeved on the supporting section 41. In this case, the bearing press plate 60 can block an open end of the receiving cavity 40 and abut against the upper edge of the outer race of the thrust bearing 30. In this case, the bearing press plate 60 is optionally detachably connected to the partition plate 11, for example, by screws, so as to prevent the thrust bearing 30 located in the receiving cavity 40 from slipping out.

In a preferred embodiment, the thrust bearing 30 is a double-row angular contact bearing.

In this embodiment, optionally, the thrust bearing 30 is a double-row angular contact bearing. Because the double-row angular contact bearing only occupies a small axial space, a length of the turntable drive shaft 4 can be reduced, so that a height of the base 1 can be reduced. Besides, the double row angular contact ball bearing can also provide high-rigidity bearing configuration and can bear an overturning moment.

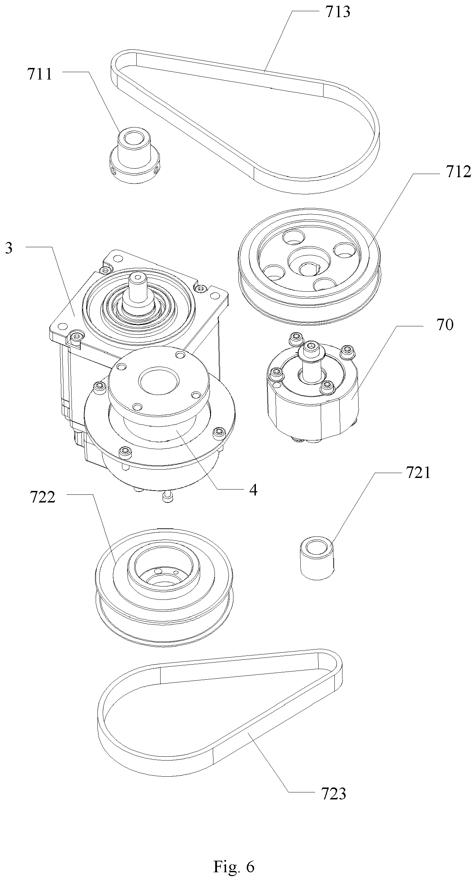

In a preferred embodiment, referring to Fig. 6, the turntable primary synchronous belt wheel 71 includes a turntable primary driving wheel 711, a turntable primary driven wheel 712 and a turntable primary synchronous belt 713, and the turntable primary driving wheel 711 is drive-connected to the turntable primary driven wheel 712 through the turntable primary synchronous belt 713; and
the turntable secondary synchronous belt wheel 72 includes a turntable secondary driving wheel 721, a turntable secondary driven wheel 722 and a turntable secondary synchronous belt 723, and the turntable secondary driving wheel 721 is drive-connected to the turntable secondary driven wheel 722 through the turntable secondary synchronous belt 723.

In this embodiment, optionally, the turntable primary synchronous belt wheel 71 includes the turntable primary driving wheel 711, the turntable primary driven wheel 712 and the turntable primary synchronous belt 713, the turntable primary driving wheel 711 is sleeved on an output shaft of the turntable drive motor 3, the turntable primary driven wheel 712 is arranged on the partition plate 11 through a transmission shaft of the turntable 2, and the turntable primary synchronous belt 713 is connected to the turntable primary driving wheel 711 and the turntable primary driven wheel 712. A transmission ratio of the turntable primary driving wheel 711 to the turntable primary driven wheel 712 can be determined according to the actual deceleration requirement.

Optionally, the turntable secondary synchronous belt wheel 72 includes the turntable secondary driving wheel 721, the turntable secondary driven wheel 722 and the turntable secondary synchronous belt 723, the turntable secondary driving wheel 721 is sleeved on the transmission shaft of the turntable 2 (in this case, one end of the transmission shaft of the turntable 2 passes through the partition plate 11 from top to bottom), and the turntable secondary driven wheel 722 is sleeved on the turntable drive shaft 4 (in this case, one end of the turntable drive shaft 4 passes through the partition plate 11 from top to bottom). The turntable secondary synchronous belt 723 can be connected to the turntable secondary driving wheel 721 and the turntable secondary driven wheel 722. A transmission ratio of the turntable secondary driving wheel 721 to the turntable secondary driven wheel 722 can be determined according to the actual deceleration requirement.

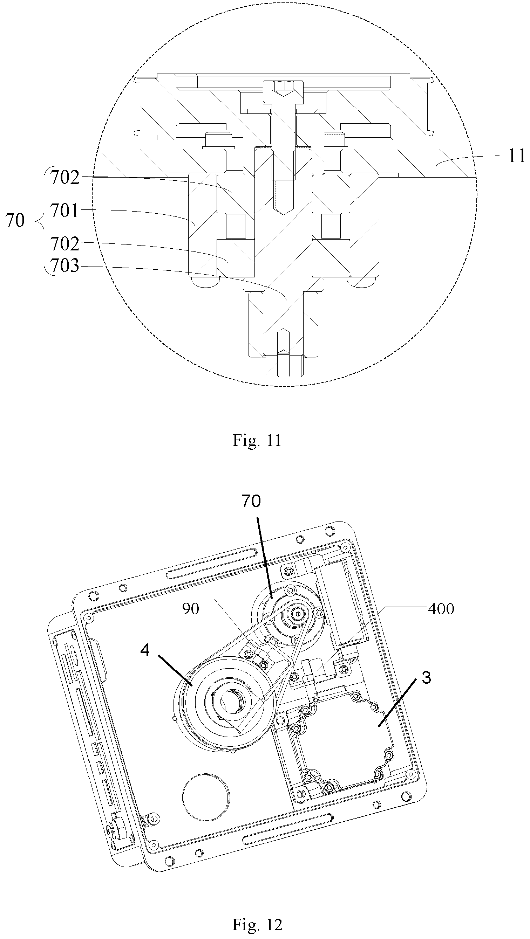

In a preferred embodiment, referring to Fig. 11, the base 1 also includes a turntable transmission shaft 70, and the partition plate 11 is provided with a shaft hole through which the turntable transmission shaft 70 passes; and the turntable transmission shaft 70 includes a mounting sleeve 701, two bearings 702 and a shaft body 703, the two bearings 702 are respectively arranged at two ends of the mounting sleeve 701 through an interference fit, the shaft body 703 is arranged in the mounting sleeve 701 and connected to inner races of the two bearings 702, one end of the shaft body 703 is connected to the turntable primary driven wheel 712 through the shaft hole, and the other end is connected to the turntable secondary driving wheel 721.

In this embodiment, optionally, the turntable transmission shaft 70 includes the mounting sleeve 701, the shaft body 703 and the two bearings 702, the shaft body 703 is installed in the mounting sleeve 701 through the two bearings 702, and the mounting sleeve 701 is fixed on the partition plate 11. Optionally, the mounting sleeve 701 is located below the partition plate 11, and the partition plate 11 has a shaft hole corresponding to the mounting sleeve 701 allowing the shaft body 703 installed in the mounting sleeve 701 to pass through. In this case, the turntable primary driven wheel 712 is connected to an end, above the partition plate 11, of the shaft body 703, and the turntable secondary driving wheel 721 is connected to an end, below the partition plate 11, of the shaft body 703.

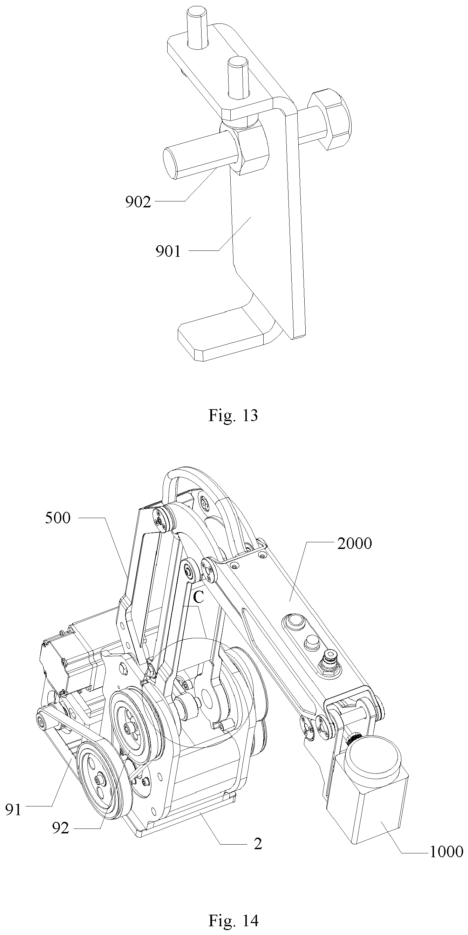

In a preferred embodiment, referring to Fig. 12 and Fig. 13, the drive structure of the desktop robotic arm further includes:
a plurality of first set screws and a first tension mechanism 90;
the partition plate 11 is provided with a plurality of first oblong holes 111, and the first set screws are fixedly connected to the mounting sleeve 701 through the first oblong holes 111;
the first tension mechanism 90 includes a first bracket 901 and a first rotation bolt 902, the first bracket 901 is provided with a first connecting end and a first threaded end, and the first tension mechanism 90 is fixedly connected to the partition plate 11 through the first connecting end; the first tension mechanism 90 is located below the partition plate 11, the first rotation bolt 902 is rotatably connected to the first threaded end, and a screw head of the first rotation bolt 902 is arranged close to the mounting sleeve 701; when the first rotation bolt 902 is rotated, the screw head of the first rotation bolt 902 abuts against the mounting sleeve 701 and pushes the mounting sleeve 701 to move along a track corresponding to the first oblong hole 111.

In this embodiment, optionally, the partition plate 11 has a plurality of first oblong holes 111; in this case, the mounting sleeve 701 can be connected to the first set screws passing through the first oblong holes 111, so as to fix the mounting sleeve 701 on the partition plate 11; besides, the movement of the first set screws in the first oblong holes 111 can drive the turntable secondary driving wheel 721 located on the shaft body 703 to move toward or away from the turntable secondary driven wheel 722, thus facilitating the adjustment of the tensity of the turntable secondary synchronous belt 723.

Moreover, the first tension mechanism 90 is also arranged in the base 1, and the first tension mechanism 90 is arranged on the bottom surface of the partition plate 11 between the turntable secondary driving wheel 721 and the turntable secondary driven wheel 722. The first tension mechanism 90 includes the first bracket 901 connected to the partition plate 11 and the first rotation bolt 902, the first bracket 901 includes the first connecting end and the first threaded end, the first connecting end is connected to the partition plate 11, and the first rotation bolt 902 forms a screw-thread fit with the first threaded end, so that the screw head of the first rotation bolt 902 can abut against the mounting sleeve 701. An abutting position can be determined according to the actual situation. In this embodiment, to install the turntable transmission shaft 70, the first set screws pass through the first oblong holes 111 first to be connected the mounting sleeve 701, but the first set screws are not fully tightened, so that the turntable transmission shaft 70 can move in the first oblong holes 111 along with the first set screws; at this point, by screwing the first rotation bolt 902, the turntable transmission shaft 70 can be driven to drive the turntable secondary driving wheel 721 to move away from the turntable secondary driven wheel 722, so as to change the tensity of the turntable secondary synchronous belt 723; when the tensity of the turntable secondary synchronous belt 723 is in an appropriate state (that is, the turntable transmission shaft 70 moves to a preset position), the mounting sleeve 701 is fixed with the first set screws, which facilitates the installation of the turntable transmission shaft 70; besides, the stability of the turntable transmission shaft 70 during operation can also be increased by the abutment of the first rotation bolt 902 with the mounting sleeve 701.

In a preferred embodiment, referring to Fig. 10, the turntable secondary driven wheel 722 is detachably connected to the connecting section 43, and the turntable secondary driven wheel 722 is provided with an abutment structure 100, which is configured into an annular shape matched with the connecting section 43; when the turntable secondary driven wheel 722 is fixedly connected to the connecting section 43, the abutment structure 100 abuts against the lower edge of the inner race of the thrust bearing 30; and the turntable secondary driven wheel 722 is provided with a connection structure 200, which is a plurality of threaded through holes, and the connecting section 43 is provided with threaded holes matched with the plurality of threaded through holes.

In this embodiment, the turntable secondary driven wheel 722 is sleeved on the turntable drive shaft 4 (that is, the inserting section 42), and the turntable secondary driven wheel 722 is provided with the connection structure 200 located directly below the turntable drive shaft 4. In this case, the connection structure 200 is a plurality of threaded through holes formed in the turntable secondary driven wheel 722, and a bottom of the turntable drive shaft 4 is provided with threaded holes which can be matched with the threaded through holes. In this case, the turntable secondary driven wheel 722 can be fixed on the turntable drive shaft 4 by screws passing through the threaded through holes and threaded holes in sequence.

Optionally, the turntable secondary driven wheel 722 is provided with the abutment structure 100, the abutment structure 100 is optionally a sleeve structure that can be sleeved on the turntable drive shaft 4, and a top of the abutment structure 100 can abut against the lower edge of the inner race of the thrust bearing 70230. In this case, there is optionally a preset distance between a top surface of the connection structure 200 and a bottom surface of the turntable drive shaft 4, that is, there is a certain gap between the connection structure 200 and the bottom of the turntable drive shaft 4. Because there is a certain machining error, in order to avoid that the abutment structure 100 cannot abut against the lower edge of the inner race of the thrust bearing 70230 when the connection structure 200 abuts against the bottom of the turntable drive shaft 4, the certain gap is formed between the connection structure 200 and the bottom of the turntable drive shaft 4, so that the thrust bearing 70230 can be clamped by the abutment structure 100 and the supporting section 41 to prevent the thrust bearing 70230 from sliding on the inserting section 42.

In a preferred embodiment, referring to Fig. 10, the drive structure of the desktop robotic arm further includes a location pin 300, the connecting section 43 is provided with a location hole, the turntable secondary driven wheel 722 is provided with a location through hole, and the location pin 300 is inserted into the position hole through the location through hole.

In this embodiment, the base 1 also includes the location pin 300, a bottom of the connecting section 43 is provided with the location hole, the turntable secondary driven wheel 722 is provided with the location through hole, and the location pin 300 can pass through the location through hole and the location hole in sequence to position the turntable secondary driven wheel 722 on the connecting section 43, so as to facilitate the fixation of the turntable secondary driven wheel 722.

In a preferred embodiment, referring to Fig. 12, the drive structure of the desktop robotic arm further includes:
a plurality of second set screws and a second tension mechanism 400;
the partition plate 11 is provided with a plurality of second oblong holes 112, and the second set screws are fixedly connected to the turntable drive motor 3 through the second oblong holes 112;
the second tension mechanism 400 includes a second bracket and a second rotation bolt, the second bracket is provided with a second connecting end and a second threaded end, and the second tension mechanism 400 is fixedly connected to the partition plate 11 through the second connecting end; the second tension mechanism 400 is located below the partition plate 11, the second rotation bolt is rotatably connected to the second threaded end, and a screw head of the second rotation bolt is arranged close to the turntable drive motor 3; when the second rotation bolt is rotated, the screw head of the second rotation bolt abuts against the turntable drive motor 3 and pushes the turntable drive motor 3 to move along a track corresponding to the second oblong hole 112.

In this embodiment, optionally, the partition plate 11 has a plurality of second oblong holes 112; in this case, the turntable drive motor 3 can be connected to the second set screws passing through the second oblong holes 112 to fix the turntable drive motor 3 on the partition plate 11; besides, the movement of the second set screws in the second oblong holes 112 can drive the turntable primary driving wheel 711 located on the turntable drive motor 3 to move toward or away from the turntable primary driven wheel 712, thus facilitating the adjustment of the tensity of the turntable primary synchronous belt 713. In this case, optionally, the turntable drive motor 3 has threaded holes matched with the second set screws, so that the turntable drive motor 3 can be fixed without nuts.

Moreover, the second tension mechanism 400 is also arranged in the base 1, and the second tension mechanism 400 is arranged on the bottom surface of the partition plate 11 between the turntable primary driving wheel 711 and the turntable primary driven wheel 712. The second tension mechanism 400 includes the second bracket connected to the partition plate 11 and the second rotation bolt, the second bracket includes the second connecting end and the second threaded end, the second connecting end is connected to the partition plate 11, and the second rotation bolt forms a screw-thread fit with the second threaded end, so that the screw head of the second rotation bolt can abut against the turntable drive motor 3. An abutting position can be determined according to the actual situation. In this embodiment, to install the turntable drive motor 3, the second set screws pass through the second oblong holes 112 first to be connected the turntable drive motor 3, but the second set screws are not fully tightened, so that the turntable drive motor 3 can move in the second oblong holes 112 along with the second set screws; at this point, by screwing the second rotation bolt, the turntable drive motor 3 can be driven to drive the turntable primary driving wheel 711 to move away from the turntable primary driven wheel 712, so as to change the tensity of the turntable primary synchronous belt 713; when the tensity of the turntable primary synchronous belt 713 is in an appropriate state (that is, the turntable drive motor 3 moves to a preset position), the turntable drive motor 3 is fixed with the second set screws, which facilitates the installation of the turntable drive motor 3; besides, the stability of the turntable drive motor 3 during operation can also be increased by the abutment of the second rotation bolt 902 with the turntable drive motor 3. Further, a structure of the second tension mechanism 400 is similar to that of the first tension mechanism 90.

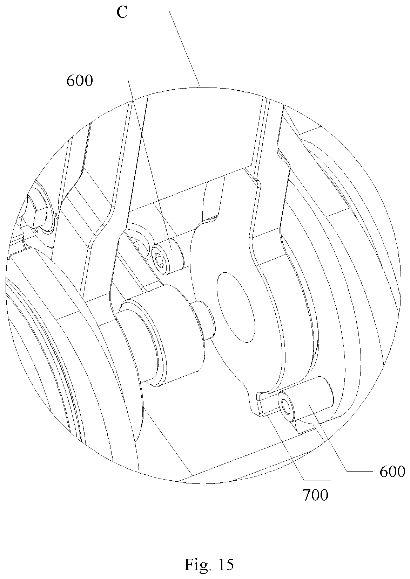

In a preferred embodiment, referring to Fig. 14 and Fig. 15, the foundation 21 is provided with limit pieces 600 located on the front and rear sides of the upper arm 500, and the limit pieces 600 are used for forming an abutting fit with a stop 700 arranged at an end of the upper arm 500.

In this embodiment, when the upper arm 500 rotates, the stop 700 located thereon will be driven to rotate. When rotating to a position of the limit piece 600, the stop 700 will be blocked by the limit piece 600, so as to limit the rotation of the upper arm 500.

In a preferred embodiment, the upper arm drive motor 5 and the forearm drive motor 6 are arranged with one over the other, and the upper arm deceleration assembly 8 and the forearm deceleration assembly 9 are respectively located on the left and right outer sides of the foundation 21.

In this embodiment, the upper arm drive motor 5 and the forearm drive motor 6 are optionally arranged with one over the other, which can optimize the spatial layout, save space, improve structural compactness, and contribute to the miniaturization and lightness of the desktop robotic arm. The upper arm deceleration assembly 8 and the forearm deceleration assembly 9 are respectively located on the left and right outer sides of the foundation 21, which simplifies the structural design, realizes easy assembly and disassembly, and facilitates daily maintenance.

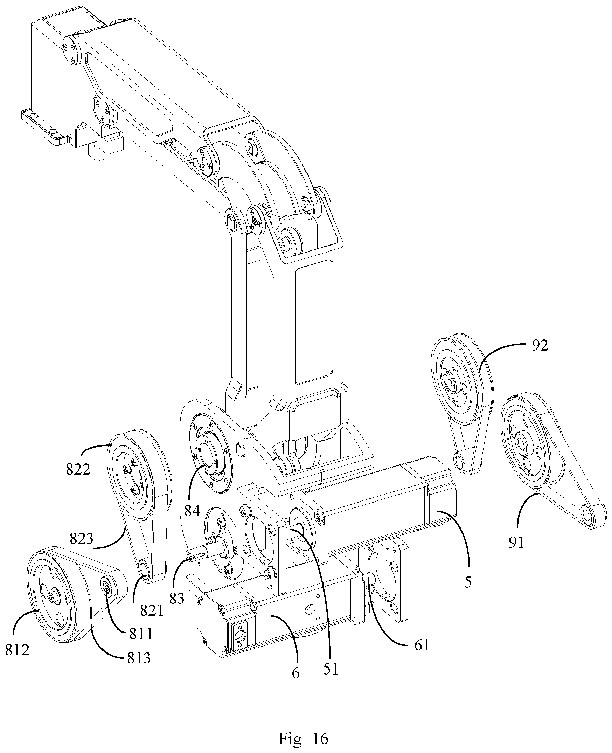

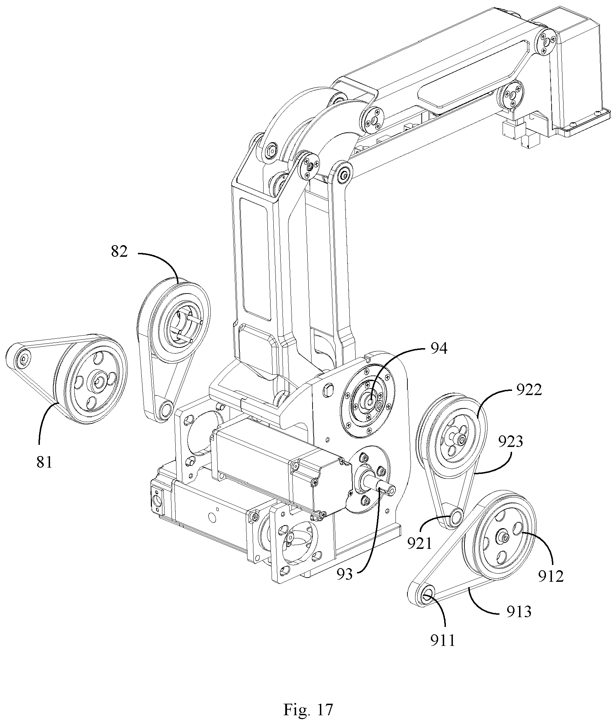

In a preferred embodiment, referring to Fig. 16 and Fig. 17, the upper arm deceleration assembly 8 includes an upper arm primary synchronous belt wheel 81 and an upper arm secondary synchronous belt wheel 82 which is arranged near the foundation 21, and
the forearm deceleration assembly 9 includes a forearm primary synchronous belt wheel 91 and a forearm secondary synchronous belt wheel 92 which is arranged near the foundation 21.

In this embodiment, the upper arm secondary synchronous belt wheel 82 of the upper arm deceleration assembly 8 is arranged near the foundation 21, that is, the upper arm secondary synchronous belt wheel 82 is located between the upper arm primary synchronous belt wheel 81 and the foundation 21; the forearm secondary synchronous belt wheel 92 of the forearm deceleration assembly 9 is arranged near the foundation 21, that is, the forearm secondary synchronous belt wheel 92 is located between the forearm primary synchronous belt wheel 91 and the foundation 21, allowing the upper arm primary synchronous belt and the forearm primary synchronous belt to be arranged away from structures on the turntable 2 (such as motor set screws, etc.), which not only avoids structural interference, but also reduces the manufacturing cost due to the omission of auxiliary components; besides, because there is no structural limitation of auxiliary components, a large size of the primary synchronous belt wheel can be realized, so as to improve a reduction ratio and the reduction effect, and ensure control accuracy.

In a preferred embodiment, referring to Fig. 16 and Fig. 17, the upper arm deceleration assembly 8 also includes an upper arm transmission shaft 83 and an upper arm drive shaft 84, the upper arm drive shaft 84 is located above the upper arm transmission shaft 83, the upper arm primary synchronous belt wheel 81 is located between an output shaft of the upper arm drive motor 5 and the upper arm transmission shaft 83, and the upper arm secondary synchronous belt wheel 82 is located between the upper arm transmission shaft 83 and the upper arm drive shaft 84; and
the forearm deceleration assembly 9 also includes a forearm transmission shaft 93 and a forearm drive shaft 94, the forearm drive shaft 94 is located above the forearm transmission shaft 93, the forearm primary synchronous belt wheel 91 is located between an output shaft of the forearm drive motor 6 and the forearm transmission shaft 93, and the forearm secondary synchronous belt wheel 92 is located between the forearm transmission shaft 93 and the forearm drive shaft 94.

In this embodiment, the upper arm drive shaft 84 is used for being connected to the upper arm 500, and the output shaft of the upper arm drive motor 5 drives the upper arm transmission shaft 83 to rotate through the upper arm primary synchronous belt wheel 81, thus realizing primary deceleration transmission; and the upper arm transmission shaft 83 drives the upper arm drive shaft 84 to rotate through the upper arm secondary synchronous belt wheel 82 to realize secondary deceleration transmission, and finally drives the upper arm 500 to rotate through the upper arm drive shaft 84. The forearm drive shaft 94 is used for driving the forearm 2000 to rotate, and a plurality of transmission links can be arranged between the forearm drive shaft 94 and the forearm 2000 for transmission. One can refer to the related art for the specific form, which will not be described here. The output shaft of the forearm drive motor 6 drives the forearm transmission shaft 93 to rotate through the forearm primary synchronous belt wheel 91, thus realizing primary deceleration transmission; and the forearm transmission shaft 93 drives the forearm drive shaft 94 to rotate through the forearm secondary synchronous belt wheel 92 to realize secondary deceleration transmission, and finally drives the forearm 2000 to rotate through the forearm drive shaft 94.

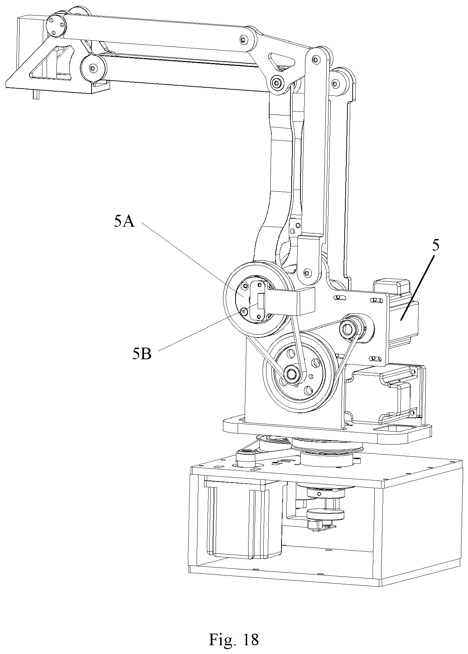

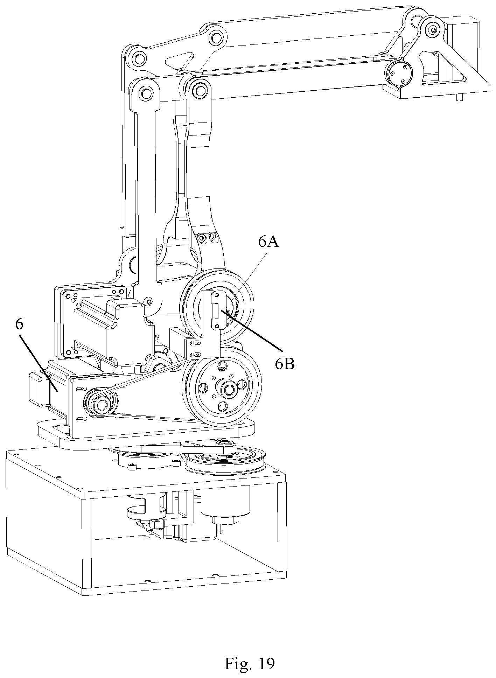

In a preferred embodiment, referring to Fig. 18 and Fig. 19, the absolute value encoder of the upper arm drive motor 5 is a single-turn absolute value encoder, which includes a first annular code wheel 5A and a first detector 5B, the first annular code wheel 5A is coaxially mounted on the upper arm drive shaft 84, and the first detector 5B is arranged opposite to the first annular code wheel 5A; and
the absolute value encoder of the forearm drive motor 6 is a single-turn absolute value encoder, which includes a second annular code wheel 6A and a second detector 6B, the second annular code wheel 6A is coaxially mounted on the forearm drive shaft 94, and the second detector 6B is arranged opposite to the second annular code wheel 6A.

In a preferred embodiment, referring to Fig. 16 and Fig. 17, the upper arm primary synchronous belt wheel 81 includes an upper arm primary driving wheel 811, an upper arm primary driven wheel 812 and an upper arm primary synchronous belt 813, and the upper arm secondary synchronous belt wheel 82 includes an upper arm secondary driving wheel 821, an upper arm secondary driven wheel 822 and an upper arm secondary synchronous belt 823;
the upper arm primary driving wheel 811 is arranged on the output shaft of the upper arm drive motor 5, the upper arm primary driven wheel 812 is arranged on the upper arm transmission shaft 83, and the upper arm primary synchronous belt 813 is arranged on the upper arm primary driving wheel 811 and the upper arm primary driven wheel 812; the upper arm secondary driving wheel 821 is arranged on the upper arm transmission shaft 83, the upper arm secondary driven wheel 822 is arranged on the upper arm drive shaft 84, and the upper arm secondary synchronous belt 823 is arranged on the upper arm secondary driving wheel 821 and the upper arm secondary driven wheel 822;
the forearm primary synchronous belt wheel 91 includes a forearm primary driving wheel 911, a forearm primary driven wheel 912 and a forearm primary synchronous belt 913, and the forearm secondary synchronous belt wheel 92 includes a forearm secondary driving wheel 921, a forearm secondary driven wheel 922 and a forearm secondary synchronous belt 923; and
the forearm primary driving wheel 911 is arranged on the output shaft of the forearm drive motor 6, the forearm primary driven wheel 912 is arranged on the forearm transmission shaft 93, the forearm primary synchronous belt 913 is arranged on the forearm primary driving wheel 911 and the forearm primary driven wheel 912, the forearm secondary driving wheel 921 is arranged on the forearm transmission shaft 93, the forearm secondary driven wheel 922 is arranged on the forearm drive shaft 94, and the forearm secondary synchronous belt 923 is arranged on the forearm secondary driving wheel 921 and the forearm secondary driven wheel 922.

In this embodiment, a diameter of the upper arm primary driven wheel 812 is larger than that of the upper arm primary driving wheel 811, and a diameter of the upper arm secondary driven wheel 822 is larger than that of the upper arm secondary driving wheel 821; the output shaft of the upper arm drive motor 5 drives the upper arm primary driving wheel 811 to rotate and drives the upper arm primary driven wheel 812 through the upper arm primary synchronous belt 813 to make the upper arm transmission shaft 83 rotate; further, the upper arm transmission shaft 83 drives the upper arm secondary driving wheel 821 to rotate, and drives the upper arm secondary driven wheel 822 through the upper arm secondary synchronous belt 823 to make the upper arm drive shaft 84 rotate.

A diameter of the forearm primary driven wheel 912 is larger than that of the forearm primary driving wheel 911, and a diameter of the forearm secondary driven wheel 922 is larger than that of the forearm secondary driving wheel 921; the output shaft of the forearm drive motor 6 drives the forearm primary driving wheel 911 to rotate and drives the forearm primary driven wheel 912 through the forearm primary synchronous belt 913 to make the forearm transmission shaft 93 rotate; further, the forearm transmission shaft 93 drives the forearm secondary driving wheel 921 to rotate, and drives the forearm secondary driven wheel 922 through the forearm secondary synchronous belt 923 to make the forearm drive shaft 94 rotate.

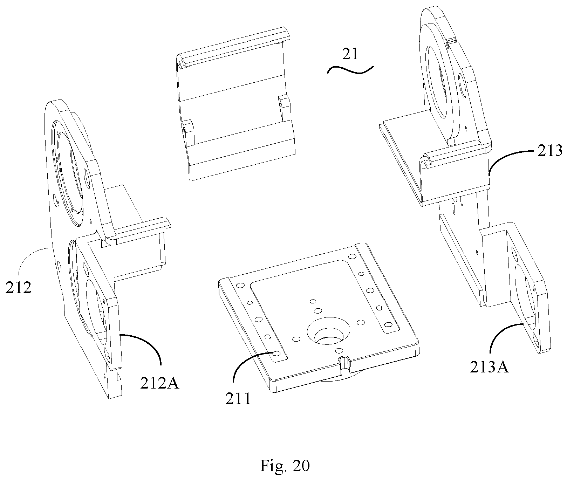

In a preferred embodiment, referring to Fig. 20, the foundation 21 includes: a base plate 211; and a first supporting member 212 and a second supporting member 213, the first supporting member 212 and the second supporting member 213 are oppositely arranged on the base plate 211, the first supporting member 212 is provided with a first mounting base 212A, and the second supporting member 213 is provided with a second mounting base 213A.

In this embodiment, the base plate 211 is a plate, and the first supporting member 212 and the second supporting member 213 can be a frame or a plate, and are oppositely arranged on the base plate 211. The first mounting base 212A on the first supporting member 212 is used for mounting the upper arm drive motor 5, the upper arm deceleration assembly 8 is arranged on the first supporting member 212, the second mounting base 213A on the second supporting member 213 is used for mounting the upper arm drive motor 6, and the upper arm deceleration assembly 9 is arranged on the second supporting member 213. It should be noted that the first mounting base 212A can be integrally formed with the first supporting member 212 or detachably connected to the first supporting member 212, for example, through screw connection. The second mounting base 213A can be arranged on the second supporting member 213 in the same way.

In a preferred embodiment, referring to Fig. 16 and Fig. 17, the upper arm primary driving wheel 811 is arranged at an end of the output shaft of the upper arm drive motor 5 to form a first empty section 51, between the upper arm primary driving wheel 811 and the first mounting base 212A, on the output shaft of the upper arm drive motor 5;
the forearm primary driving wheel 911 is arranged at an end of the output shaft of the forearm drive motor 6 to form a second empty section 52, between the forearm primary driving wheel 911 and the second mounting base 213A, on the output shaft of the forearm drive motor 6; and
the first mounting base 212A protrudes to the side opposite to the second supporting member 213, and the second mounting base 213Aprotrudes to the side opposite to the first supporting member 212.

In this embodiment, In order to avoid structural interference, a length of the reserved first empty section 51 is not greater than a length of a protrusion structure (such as a set screw of the upper arm drive motor 5) on the first mounting base 212A, so that the upper arm primary synchronous belt 813 will not make contact with the protrusion structure on the first mounting base 212A during operation, and normal deceleration transmission can be realized. Accordingly, the reservation of the second empty section 52 is also based on the same principle, and the same effect can be obtained, which will not be described in detail here. Further, the first empty section 51 can be lengthened to provide an installation position for the wheel 82 of the upper arm secondary synchronous belt 823, and the second empty section 52 can be lengthened to provide an installation position for the wheel 92 of the forearm secondary synchronous belt 923. Further, the first mounting base 212A protrudes to the side opposite to the second supporting member 213, and can form an installation space at an inner side of the wheel 81 of the upper arm primary synchronous belt 813 together with the above-mentioned first empty section 51; in this way, a receding clearance can be enlarged, the installation position of the wheel 82 of the upper arm secondary synchronous belt 823 can be properly provided, and structural compactness is improved. Accordingly, the second mounting base 213A protrudes to the side opposite to the first supporting member 212, and can form an installation space at an inner side of the wheel 91 of the forearm primary synchronous belt 913 together with the above-mentioned second empty section 52; in this way, a receding clearance can be enlarged, the installation position of the wheel 92 of the forearm secondary synchronous belt 923 can be properly provided, and structural compactness is improved.

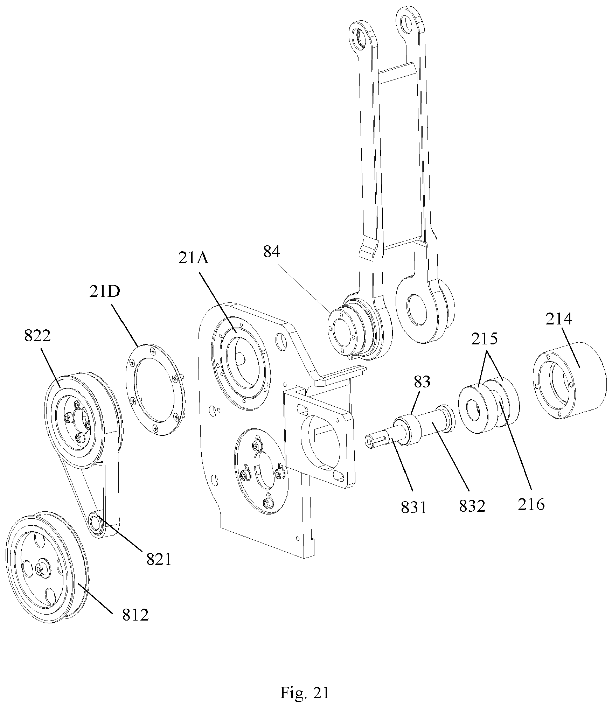

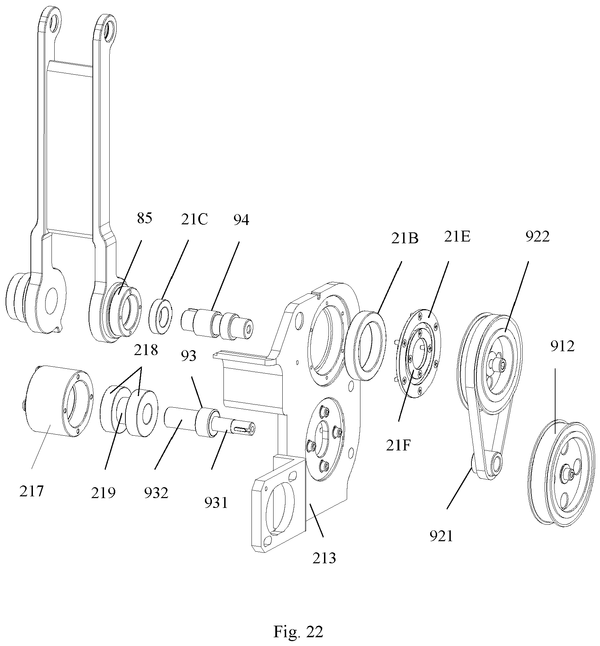

In a preferred embodiment, referring to Fig. 21 and Fig. 22, the upper arm transmission shaft 83 includes a first mounting section 831 located at its end, the upper arm secondary driving wheel 821 is located on the first mounting section 831, a middle area of the upper arm primary driven wheel 812 is provided with a first threaded through hole, and an end face of the upper arm transmission shaft 83 is provided with a first threaded hole matched with the first threaded through hole; and
the forearm transmission shaft 93 includes a second mounting section 931 at its end, the forearm secondary driving wheel 921 is located on the second mounting section 931, a middle area of the forearm primary driven wheel 912 is provided with a second threaded through hole, and an end face of the forearm transmission shaft 93 is provided with a second threaded hole matched with the second threaded through hole.

In this embodiment, the upper arm secondary driving wheel 821 is fixedly sleeved on the first mounting section 831 of the upper arm transmission shaft 83, the first mounting section 831 is located at the end of the upper arm transmission shaft 83, and the upper arm primary driven wheel 812 is locked to an end face of the upper arm transmission shaft 83 by a bolt, that is, the upper arm secondary driving wheel 821 is located on an inner side of the upper arm primary driven wheel 812. The forearm secondary driving wheel 921 is fixedly sleeved on the second mounting section 931 of the forearm transmission shaft 93, the second mounting section 931 is located at the end of the upper arm transmission shaft 83, and the forearm primary driven wheel 912 is locked to an end face of the forearm transmission shaft 93 by a bolt, that is, the forearm secondary driving wheel 921 is located on an inner side of the forearm primary driven wheel 912. The structure is simple and stable, and assembly and disassembly are easy.

In a preferred embodiment, referring to Fig. 21 and Fig. 22, the first supporting member 212 is provided with a first through hole, a first holder 214 arranged corresponding to the first through hole and two first bearings 215 located on the first holder 214, a first bearing mounting hole is formed in the first holder 214, the two first bearings 215 are arranged in the first bearing mounting hole in a spaced mode, the upper arm transmission shaft 83 passes through the first through hole, the upper arm transmission shaft 83 also includes a first connecting section forming an interference fit with inner races of the two first bearings 215, and the first connecting section is provided with a first shaft sleeve 216 located between the two first bearings 215; and
the second supporting member 213 is provided with a second through hole, a second holder 217 arranged corresponding to the second through hole and two second bearings 218 located on the second holder 217, a second bearing mounting hole is formed in the second holder 217, the two second bearings 218 are arranged in the second bearing mounting hole in a spaced mode, the forearm transmission shaft 93 passes through the second through hole, the forearm transmission shaft 93 also includes a second connecting section forming an interference fit with inner races of the two second bearings 218, and the second connecting section is provided with a second shaft sleeve 219 located between the two second bearings 218.

In this embodiment, an aperture of the first through hole on the first supporting member 212 is larger than an axial diameter of the upper arm transmission shaft 83. The upper arm transmission shaft 83 passes through the first through hole, with two ends located on both sides of the first supporting member 212 respectively. The upper arm transmission shaft 83 is rotatably matched with the first holder 214 through the two first bearings 215 and fixed on the first supporting member 212 through the first holder 214. An aperture of the second through hole on the second supporting member 213 is larger than an axial diameter of the forearm transmission shaft 93. The forearm transmission shaft 93 passes through the second through hole, with two ends located on both sides of the second supporting member 213 respectively. The forearm transmission shaft 93 is rotatably matched with the second holder 217 through the two second bearings 218 and fixed on the second supporting member 213 through the second holder 217. Further, the two first bearings 215 are spaced apart by the first shaft sleeve 216, and the two second bearings 218 are spaced apart by the second shaft sleeve 219. With the above structure, the upper arm transmission shaft 83 and the forearm transmission shaft 93 are stable during rotation, easy to disassemble and assemble, and convenient to maintain.

In a preferred embodiment, referring to Fig. 21 and Fig. 22, the first supporting member 212 is provided with a third bearing mounting hole and a third bearing 21A located in the third bearing mounting hole 212, and the upper arm drive shaft 84 forms an interference fit with an inner race of the third bearing 21A; and
the second supporting member 213 is provided with a fourth bearing mounting hole, a fourth bearing 21B in the fourth bearing mounting hole and an upper arm driven rotation shaft 85 forming an interference fit with an inner race of the fourth bearing 21B, the upper arm driven rotation shaft 85 is provided with a fifth bearing mounting hole and a fifth bearing 21C in the fifth bearing mounting hole, the forearm drive shaft 94 forms an interference fit with an inner race of the fifth bearing 21C, and two ends of the forearm drive shaft pass through the fifth bearing mounting hole.

In this embodiment, the upper arm drive shaft 84 is mounted on the first supporting member 212 through the third bearing 21A, and the upper arm driven rotation shaft 85 is mounted on the second supporting member 213 through the fourth bearing 21B, and is connected to the upper arm 500 or integrally formed to cooperate with the upper arm drive shaft 84 to realize the rotation of the upper arm 500 on the foundation 21. The forearm drive shaft 84 is mounted on the upper arm driven rotation shaft 85 through the fifth bearing 21C and arranged coaxially with the upper arm driven rotation shaft 85, that is, in an "axis within axis" manner. The forearm drive shaft 84 can rotate on the upper arm driven rotation shaft 85, which does not interfere with the rotation of the upper arm driven rotation shaft 85 on the foundation 21. The structure is ingenious in design and compact, and stable cooperation is realized.

In a preferred embodiment, referring to Fig. 21 and Fig. 22, the first supporting member 212 is also provided with a first annular cover plate 21D which is arranged corresponding to the third bearing mounting hole, the first annular cover plate 21D abuts against an outer race of the third bearing 21A, a middle area of the upper arm secondary driven wheel 822 is provided with a plurality of third threaded through holes, and an end face of the upper arm drive shaft 84 is provided with third threaded holes which are matched with the third threaded through holes; and
the second supporting member 213 is also provided with a second annular cover plate 21E which is arranged corresponding to the fourth bearing mounting hole, the second annular cover plate 21E abuts against an outer race of the fourth bearing 21B, the upper arm driven rotation shaft 85 is also provided with a third annular cover plate 21F which is arranged corresponding to the fifth bearing mounting hole, the third annular cover plate 21F abuts against an outer race of the fifth bearing 21C, a middle area of the forearm secondary driven wheel 922 is provided with a fourth threaded through hole, and an end face of the forearm drive shaft 921 is provided with a fourth threaded hole matched with the fourth threaded through hole.

In this embodiment, the annular cover plates abut against the bearings correspondingly, which can prevent the bearings from sliding out of respective bearing mounting holes, thereby increasing mounting stability, and also preventing impurities from entering the bearings to affect rotation. Further, the upper arm secondary driven wheel is locked to the end face of the upper arm drive shaft by a bolt, and the forearm secondary driven wheel is locked to the end face of the forearm drive shaft by a bolt, which realizes stable connection and easy assembly and disassembly.

In a preferred embodiment, referring to Fig. 14, the drive structure of the desktop robotic arm further includes: an actuator motor 1000; and the actuator motor 1000 is a servo motor, and the actuator motor 1000 includes an absolute value encoder and an electromagnetic contracting brake for outage braking.

In a preferred embodiment, the desktop robotic arm also includes: a control panel; and the control panel is electrically connected to the turntable drive motor 3, the upper arm drive motor 5, the forearm drive motor 6 and the actuator motor 1000.

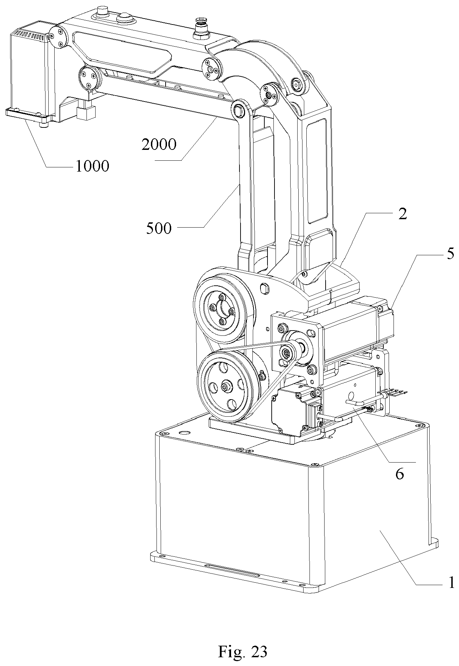

Referring to Fig. 23, a desktop robotic arm further proposed by the present invention includes a drive structure of the desktop robotic arm. The specific structure of the drive structure of the desktop robotic arm is described in the above-mentioned embodiments. Because the desktop robotic arm adopts all the technical schemes of all the above-mentioned embodiments, it has at least all the technical effects brought by the technical schemes of the above-mentioned embodiments, which will not be repeated here.

The present invention further provides a robot which includes a desktop robotic arm. The desktop robotic arm includes the drive structure of the desktop robotic arm described in the previous embodiments. Because the robot adopts all the technical schemes of all the above-mentioned embodiments, it has at least all the technical effects brought by the technical schemes of the above-mentioned embodiments, which will not be repeated here.

## Claims

1. A drive structure of a desktop robotic arm, comprising a base (1) and a turntable (2), wherein
the base (1) is internally provided with a turntable drive motor (3) and a turntable drive shaft (4), the turntable drive motor (3) is drive-connected to the turntable drive shaft (4), the turntable drive shaft (4) is drive-connected to the turntable (2), the turntable (2) is provided with an upper arm drive motor (5) and a forearm drive motor (6), and the turntable drive motor (3), the upper arm drive motor (5) and the forearm drive motor (6) are all servo motors;
the turntable (2) comprises a foundation (21), and the upper arm drive motor (5) and the forearm drive motor (6) are arranged on a back side of the foundation (21);
an upper arm deceleration assembly (8), which is drive-connected to the upper arm drive motor (5); and
a forearm deceleration assembly (9), which is drive-connected to the forearm drive motor (6); **characterized in that**
the servo motors are all servo motors with absolute value encoders,
the upper arm deceleration assembly (8) comprises an upper arm primary synchronous belt wheel (81) and an upper arm secondary synchronous belt wheel (82) arranged between the foundation (21) and the upper arm primary synchronous belt wheel (81), and
the forearm deceleration assembly (9) comprises a forearm primary synchronous belt wheel (91) and a forearm secondary synchronous belt wheel (92) arranged between the foundation (21) and the forearm primary synchronous belt wheel (91).

2. The drive structure of a desktop robotic arm of claim 1, **characterized in that**
the base (1) or the turntable (2) is provided with a battery or a battery compartment electrically connected to the absolute value encoders of the upper arm drive motor (5) and the forearm drive motor (6), or a terminal or a port for battery connection;
a battery or a battery compartment electrically connected to the absolute value encoder of the turntable drive motor (3), or a terminal or a port for battery connection, which is provided on the base (1) or the turntable (2);
the absolute value encoders of the turntable drive motor (3), the upper arm drive motor (5) and the forearm drive motor (6) are all multi-turn absolute value encoders;
the upper arm drive motor (5) and the forearm drive motor (6) each comprise an electromagnetic contracting brake for outage braking.

3. The drive structure of a desktop robotic arm of claim 1, **characterized in that** the turntable drive shaft (4) is arranged in a central area of the base (1), the turntable drive motor (3) is arranged around the turntable drive shaft (4) in a staggered manner;
a turntable deceleration assembly (7), the turntable drive motor (3) being drive-connected to the turntable drive shaft (4) through the turntable deceleration assembly (7);
the turntable deceleration assembly (7) comprises a turntable primary synchronous belt wheel (71) and a turntable secondary synchronous belt wheel (72); and
one end of the turntable primary synchronous belt wheel (71) is drive-connected to the turntable drive motor (3), the other end is drive-connected to one end of the turntable secondary synchronous belt wheel (72), and the other end of the turntable secondary synchronous belt wheel (72) is drive-connected to the turntable drive shaft (4).

4. The drive structure of a desktop robotic arm of claim 3, **characterized in that** a partition plate (11) extending in a horizontal direction is provided in the base (1), the turntable primary synchronous belt wheel (71) is arranged on a top surface of the partition plate (11), the turntable drive motor (3) is arranged under a bottom surface of the partition plate (11), an output shaft of the turntable drive motor (3) penetrates through the partition plate (11) to be drive-connected to one end of the turntable primary synchronous belt wheel (71), and the turntable secondary synchronous belt wheel (72) is arranged on the bottom surface of the partition plate (11);
the turntable drive shaft (4) is arranged on the partition plate (11) through a thrust bearing (30);
the partition plate (11) is provided with a receiving cavity (40), the receiving cavity (40) is provided with a receiving structure (50) matched with a lower edge of an outer race of the thrust bearing (30), the thrust bearing (30) is arranged in the receiving cavity (40), and the lower edge of the outer race of the thrust bearing (30) is connected to the receiving structure (50); the turntable drive shaft (4) is vertically inserted into an inner race of the thrust bearing (30), and the turntable drive shaft (4) is provided with a supporting section (41), an inserting section (42) and a connecting section (43); and the supporting section (41) abuts against an upper edge of the inner race of the thrust bearing (30), the inserting section (42) abuts against the inner race of the thrust bearing (30), and the connecting section (43) is drive-connected to the turntable secondary synchronous belt wheel (72); and
a bearing press plate (60), which is hollow and annular, is arranged on the thrust bearing (30), abuts against the outer race of the thrust bearing (30), and is fixedly connected to the partition plate (11).

5. The drive structure of a desktop robotic arm of claim 4, **characterized in that** the turntable primary synchronous belt wheel (71) comprises a turntable primary driving wheel (711), a turntable primary driven wheel (712) and a turntable primary synchronous belt (713), and the turntable primary driving wheel (711) is drive-connected to the turntable primary driven wheel (712) through the turntable primary synchronous belt (713); and
the turntable secondary synchronous belt wheel (72) comprises a turntable secondary driving wheel (721), a turntable secondary driven wheel (722) and a turntable secondary synchronous belt (711), and the turntable secondary driving wheel (721) is drive-connected to the turntable secondary driven wheel (722) through the turntable secondary synchronous belt (711).

6. The drive structure of a desktop robotic arm of claim 5, **characterized in that**
the base (1) further comprises a turntable transmission shaft (70), and the partition plate (11) is provided with a shaft hole through which the turntable transmission shaft (70) passes; and the turntable transmission shaft (70) comprises a mounting sleeve (701), two bearings (702) and a shaft body (703), the two bearings (702) are respectively arranged at two ends of the mounting sleeve (701) through an interference fit, the shaft body (703) is arranged in the mounting sleeve (701) and connected to inner races of the two bearings (702), one end of the shaft body (703) is connected to the turntable primary driven wheel (712) through the shaft hole, and the other end is connected to the turntable secondary driving wheel (721).

7. The drive structure of a desktop robotic arm of claim 6, further comprising a plurality of first set screws and a first tension mechanism (90), wherein
the partition plate (11) is provided with a plurality of first oblong holes (111), and the first set screws are fixedly connected to the mounting sleeve (701) through the first oblong holes (111); and
the first tension mechanism (90) comprises a first bracket (901) and a first rotation bolt (902), the first bracket (901) is provided with a first connecting end and a first threaded end, and the first tension mechanism (90) is fixedly connected to the partition plate (11) through the first connecting end; the first tension mechanism (90) is located below the partition plate (11), the first rotation bolt (902) is rotatably connected to the first threaded end, and a screw head of the first rotation bolt (902) is arranged close to the mounting sleeve (701).

8. The drive structure of a desktop robotic arm of claim 5, **characterized in that** the turntable secondary driven wheel (722) is detachably connected to the connecting section (43), and the turntable secondary driven wheel (722) is provided with an abutment structure (100), which is configured into an annular shape matched with the connecting section (43); when the turntable secondary driven wheel (722) is fixedly connected to the connecting section (43), the abutment structure (100) abuts against the lower edge of the inner race of the thrust bearing (30); and the turntable secondary driven wheel (722) is provided with a connection structure (200), which is a plurality of threaded through holes, and the connecting section (43) is provided with threaded holes matched with the plurality of threaded through holes.

9. The drive structure of a desktop robotic arm of claim 4, further comprising a plurality of second set screws and a second tension mechanism (400), wherein
the partition plate (11) is provided with a plurality of second oblong holes (112), and the second set screws are fixedly connected to the turntable drive motor (3) through the second oblong holes (112); and
the second tension mechanism (400) comprises a second bracket and a second rotation bolt, the second bracket is provided with a second connecting end and a second threaded end, and the second tension mechanism (400) is fixedly connected to the partition plate (11) through the second connecting end; the second tension mechanism (400) is located below the partition plate (11), the second rotation bolt is rotatably connected to the second threaded end, and a screw head of the second rotation bolt is arranged close to the turntable drive motor (3).

10. The drive structure of a desktop robotic arm of claim 3, **characterized in that** the upper arm drive motor (5) and the forearm drive motor (6) are arranged with one over the other, and the upper arm deceleration assembly (8) and the forearm deceleration assembly (9) are respectively located on the left and right outer sides of the foundation (21);
the upper arm deceleration assembly (8) further comprises an upper arm transmission shaft (83) and an upper arm drive shaft (84), the upper arm drive shaft (84) is located above the upper arm transmission shaft (83), the upper arm primary synchronous belt wheel (81) is located between an output shaft of the upper arm drive motor (5) and the upper arm transmission shaft (83), and the upper arm secondary synchronous belt wheel (82) is located between the upper arm transmission shaft (83) and the upper arm drive shaft (84); and
the forearm deceleration assembly (9) further comprises a forearm transmission shaft (93) and a forearm drive shaft (94), the forearm drive shaft (94) is located above the forearm transmission shaft (93), the forearm primary synchronous belt wheel (91) is located between an output shaft of the forearm drive motor (6) and the forearm transmission shaft (93), and the forearm secondary synchronous belt wheel (92) is located between the forearm transmission shaft (93) and the forearm drive shaft (94).

11. The drive structure of a desktop robotic arm of claim 10, **characterized in that** the absolute value encoder of the upper arm drive motor (5) is a single-turn absolute value encoder, which comprises a first annular code wheel (5A) and a first detector (5B), the first annular code wheel (5A) is coaxially mounted on the upper arm drive shaft (84), and the first detector (5B) is arranged opposite to the first annular code wheel (5A); and
the absolute value encoder of the forearm drive motor (6) is a single-turn absolute value encoder, which comprises a second annular code wheel (6A) and a second detector (6B), the second annular code wheel (6A) is coaxially mounted on the forearm drive shaft (94), and the second detector (6B) is arranged opposite to the second annular code wheel (6A).

12. The drive structure of a desktop robotic arm of claim 10, **characterized in that** the upper arm primary synchronous belt wheel (81) comprises an upper arm primary driving wheel (811), an upper arm primary driven wheel (812) and an upper arm primary synchronous belt (813), and the upper arm secondary synchronous belt wheel (82) comprises an upper arm secondary driving wheel (821), an upper arm secondary driven wheel (822) and an upper arm secondary synchronous belt (823);
the upper arm primary driving wheel (811) is arranged on the output shaft of the upper arm drive motor (5), the upper arm primary driven wheel (812) is arranged on the upper arm transmission shaft (83), and the upper arm primary synchronous belt (813) is arranged on the upper arm primary driving wheel (811) and the upper arm primary driven wheel (812); the upper arm secondary driving wheel (821) is arranged on the upper arm transmission shaft (83), the upper arm secondary driven wheel (822) is arranged on the upper arm drive shaft (84), and the upper arm secondary synchronous belt (823) is arranged on the upper arm secondary driving wheel (821) and the upper arm secondary driven wheel (822);
the forearm primary synchronous belt wheel (91) comprises a forearm primary driving wheel (911), a forearm primary driven wheel (912) and a forearm primary synchronous belt (913), and the forearm secondary synchronous belt wheel (92) comprises a forearm secondary driving wheel (921), a forearm secondary driven wheel (922) and a forearm secondary synchronous belt (923); and
the forearm primary driving wheel (911) is arranged on the output shaft of the forearm drive motor (6), the forearm primary driven wheel (912) is arranged on the forearm transmission shaft (93), the forearm primary synchronous belt (913) is arranged on the forearm primary driving wheel (911) and the forearm primary driven wheel (912), the forearm secondary driving wheel (921) is arranged on the forearm transmission shaft (93), the forearm secondary driven wheel (922) is arranged on the forearm drive shaft (94), and the forearm secondary synchronous belt (923) is arranged on the forearm secondary driving wheel (921) and the forearm secondary driven wheel (922).

13. The drive structure of a desktop robotic arm of claim 12, **characterized in that** the foundation (21) comprises: a base plate (211); and a first supporting member (212) and a second supporting member (213), the first supporting member (212) and the second supporting member (213) being oppositely arranged on the base plate (211), the first supporting member (212) being provided with a first mounting base (212A), and the second supporting member (213) being provided with a second mounting base (213A);
the upper arm primary driving wheel (811) is arranged at an end of the output shaft of the upper arm drive motor (5) to form a first empty section (51), between the upper arm primary driving wheel (811) and the first mounting base (212A), on the output shaft of the upper arm drive motor (5);
the forearm primary driving wheel (911) is arranged at an end of the output shaft of the forearm drive motor (6) to form a second empty section (52), between the forearm primary driving wheel (911) and the second mounting base (213A), on the output shaft of the forearm drive motor (6); and
the first mounting base (212A) protrudes to the side opposite to the second supporting member (213), and the second mounting base (213A) protrudes to the side opposite to the first supporting member (212);
the upper arm transmission shaft (83) comprises a first mounting section (831) located at its end, the upper arm secondary driving wheel (821) is located on the first mounting section (831), a middle area of the upper arm primary driven wheel (812) is provided with a first threaded through hole, and an end face of the upper arm transmission shaft (83) is provided with a first threaded hole matched with the first threaded through hole; and
the forearm transmission shaft (93) comprises a second mounting section (931) at its end, the forearm secondary driving wheel (921) is located on the second mounting section (931), a middle area of the forearm primary driven wheel (912) is provided with a second threaded through hole, and an end face of the forearm transmission shaft (93) is provided with a second threaded hole matched with the second threaded through hole;
the first supporting member (212) is provided with a first through hole, a first holder (214) arranged corresponding to the first through hole and two first bearings (215) located on the first holder (214), a first bearing mounting hole is formed in the first holder (214), the two first bearings (215) are arranged in the first bearing mounting hole in a spaced mode, the upper arm transmission shaft (83) passes through the first through hole, the upper arm transmission shaft (83) further comprises a first connecting section forming an interference fit with inner races of the two first bearings (215), and the first connecting section is provided with a first shaft sleeve located between the two first bearings (215); and
the second supporting member (213) is provided with a second through hole, a second holder (217) arranged corresponding to the second through hole and two second bearings (218) located on the second holder (217), a second bearing mounting hole is formed in the second holder (217), the two second bearings (218) are arranged in the second bearing mounting hole in a spaced mode, the forearm transmission shaft (93) passes through the second through hole, the forearm transmission shaft (93) further comprises a second connecting section forming an interference fit with inner races of the two second bearings (218), and the second connecting section is provided with a second shaft sleeve (219) located between the two second bearings (218).

14. A desktop robotic arm, **characterized in that** the desktop robotic arm comprises the drive structure of a desktop robotic arm of claim 1.

15. A robot, **characterized in that** the robot comprises the desktop robotic arm of claim 14.

## Patentansprüche

1. Eine Antriebsstruktur eines Tischroboterarms, umfassend eine Basis (1) und einen Drehteller (2), wobei
die Basis (1) im Inneren mit einem Drehteller-Antriebsmotor (3) und einer Drehteller-Antriebswelle (4) versehen ist; der Drehteller-Antriebsmotor (3) mit der Drehteller-Antriebswelle (4) antriebsverbunden ist; die Drehteller-Antriebswelle (4) mit dem Drehteller (2) antriebsverbunden ist; der Drehteller (2) mit einem Oberarm-Antriebsmotor (5) und einem Vorderarm-Antriebsmotor (6) versehen ist, und der Drehteller-Antriebsmotor (3), der Oberarm-Antriebsmotor (5), und der Vorderarm-Antriebsmotor (6) alle Servomotoren sind;
der Drehteller (2) ein Fundament (21) umfasst, und der Oberarm-Antriebsmotor (5) und der Vorderarm-Antriebsmotor (6) an einer Rückseite des Fundaments (21) angeordnet sind;
eine Oberarm-Verzögerungsbaugruppe (8), die mit dem Oberarm-Antriebsmotor (5) antriebsverbunden ist; und
eine Vorderarm-Verzögerungsbaugruppe (9), die mit dem Vorderarm-Antriebsmotor (6) antriebsverbunden ist;
**dadurch gekennzeichnet, dass** die Servomotoren alle Servomotoren mit Absolutwertgebern sind; die Oberarm-Verzögerungsbaugruppe (8) ein Oberarm-Primärsynchronriemenrad (81) und ein Oberarm-Sekundärsynchronriemenrad (82) umfasst, die zwischen dem Fundament (21) und dem Oberarm-Primärsynchronriemenrad (81) angeordnet sind, und
die Vorderarm-Verzögerungsbaugruppe (9) ein Vorderarm-Primärsynchronriemenrad (91) und ein Vörderarm-Sekundärsynchronriemenrad (92) umfasst, die zwischen dem Fundament (21) und dem Vörderarm-Primärsynchronriemenrad (91) angeordnet sind.

2. Antriebsstruktur eines Tischroboterarms nach Anspruch 1, wobei die Basis (1) oder der Drehteller (2) mit einer Batterie oder einem Batteriefach, die bzw. das elektrisch mit den Absolutwertgebern des Oberarm-Antriebsmotors (5) und des Vorderarm-Antriebsmotors (6) verbunden ist, oder einer Klemme oder einem Anschluss für den Batterieanschluss versehen ist;
die Basis (1) oder der Drehteller (2) ferner mit einer Batterie oder einem Batteriefach, die bzw. das elektrisch mit dem Absolutwertgebers des Drehteller-Antriebsmotors (3) verbunden ist, oder einer Klemme oder einem Anschluss für den Batterieanschluss versehen ist;
die Absolutwertgebern des Drehteller-Antriebsmotors (3), des Oberarm-Antriebsmotors (5), und des Vorderarm-Antriebsmotors (6) allesamt Multiturn-Absolutwertgebern sind;
der Oberarm-Antriebsmotor (5) und der Vorderarm-Antriebsmotor (6) jeweils eine elektromagnetische Schrumpfbremse zur Auslaufbremsung aufweisen.

3. Antriebsstruktur eines Tischroboterarms nach Anspruch 1, wobei die Drehteller-Antriebswelle (4) in einem zentralen Bereich der Basis (1) angeordnet ist, und der Drehteller-Antriebsmotor (3) versetzt um die Drehteller-Antriebswelle (4) angeordnet ist;
die Antriebsstruktur ferne eine Drehteller-Verzögerungsbaugruppe (7) umfasst, wobei der DrehtellerAntriebsmotor (3) über die Drehteller-Verzögerungsbaugruppe (7) mit der Drehteller-Antriebswelle (4) antriebsverbunden ist;
die Drehteller-Verzögerungsbaugruppe (7) ein Drehteller-Primärsynchronriemenrad (71) und ein Drehteller-Sekundärsynchronriemenrad (72) umfasst, und
ein Ende des Drehteller-Primärsynchronriemenrads (71) mit dem Drehteller-Antriebsmotor (3) antriebsverbunden ist, und das andere Ende des Drehteller-Primärsynchronriemenrads (71) mit einem Ende des Drehteller-Sekundärsynchronriemenrads (72) antriebsverbunden ist; das andere Ende des Drehteller-Sekundärsynchronriemenrads (72) mit der Drehteller-Antriebswelle (4) antriebsverbunden ist.

4. Antriebsstruktur eines Tischroboterarms nach Anspruch 3, wobei in der Basis (1) eine sich in horizontaler Richtung erstreckende Trennplatte (11) vorgesehen ist; das Drehteller-Primärsynchronriemenrad (71) auf einer oberen Fläche der Trennplatte (11) angeordnet ist; der DrehtellerAntriebsmotor (3) unter einer unteren Fläche der Trennplatte (11) angeordnet ist; eine Ausgangswelle des Drehteller-Antriebsmotors (3) die Trennplatte (11) durchdringt, um mit einem Ende des Drehteller-Primärsynchronriemenrads (71) antriebsverbunden zu sein, und das Drehteller-Sekundärsynchronriemenrad (72) auf der unteren Fläche der Trennplatte (11) angeordnet ist;
die Drehteller-Antriebswelle (4) ist über ein Axiallager (30) an der Trennplatte (11) angeordnet;
die Trennplatte (11) mit einem Aufnahmehohlraum (40) versehen ist, und derAufnahmehohlraum (40) mit einer Aufnahmestruktur (50) versehen ist, die an einen unteren Rand eines Außenrings des Axiallagers (30) angepasst ist; das Axiallager (30) in dem Aufnahmehohlraum (40) angeordnet ist, und der untere Rand des Außenrings des Axiallagers (30) mit der Aufnahmestruktur (50) verbunden ist; die Drehteller-Antriebswelle (4) vertikal in einen Innenring des Axiallagers (30) eingesetzt ist, und die Drehteller-Antriebswelle (4) mit einem Stützabschnitt (41), einem Einsetzabschnitt (42), und einem Verbindungsabschnitt (43) versehen ist; der Stützabschnitt (41) an einem oberen Rand des Innenrings des Axiallagers (30) anliegt, der Einsetzabschnitt (42) an dem Innenring des Axiallagers (30) anliegt, und der Verbindungsabschnitt (43) mit dem Drehteller-Sekundärsynchronriemenrad (72) antriebsverbunden ist; und
die Antriebsstruktur ferne eine Lagerpressplatte (60) umfasst, die hohl und ringförmig ist, auf dem Axiallager (30) angeordnet ist, an dem Außenring des Axiallagers (30) anliegt und fest mit der Trennplatte (11) verbunden ist.

5. Antriebsstruktur eines Tischroboterarms nach Anspruch 4, wobei das Drehteller-Primärsynchronriemenrad (71) ein antreibendes Drehteller-Primärrad (711), ein angetriebenes Drehteller-Primärrad (712), und einen Drehteller-Primärsynchronriemen (713) umfasst, und das antreibende Drehteller-Primärrad (711) über den Drehteller-Primärsynchronriemen (713) mit dem angetriebenen Drehteller-Primärrad (712) antriebsverbunden ist; und
das Drehteller-Sekundärsynchronriemenrad (72) ein antreibendes Drehteller-Sekundärrad (721), ein angetriebenes Drehteller-Sekundärrad (722), und einen Drehteller-Sekundärsynchronriemen (711) umfasst, und das antreibende Drehteller-Sekundärrad (721) über den Drehteller-Sekundärsynchronriemen (711) mit dem angetriebenen Drehteller-Sekundärrad (722) antriebsverbunden ist.

6. Antriebsstruktur eines Tischroboterarms nach Anspruch 5, wobei die Basis (1) ferner eine Drehteller-Übertragungswelle (70) umfasst und die Trennplatte (11) mit einem Wellenloch versehen ist, durch das die Drehteller-Übertragungswelle (70) hindurchgeht; die Drehteller-Übertragungswelle (70) eine Montagehülse (701), zwei Lager (702), und einen Wellenkörper (703) umfasst, wobei die zwei Lager (702) jeweils an zwei Enden der Montagehülse (701) durch einen Presssitz angeordnet sind, und der Wellenkörper (703) in der Montagehülse (701) angeordnet und mit Innenringen der zwei Lager (702) verbunden ist; ein Ende des Wellenkörpers (703) durch das Wellenloch mit dem angetriebenen Drehteller-Primärrad (712) verbunden ist, und das andere Ende des Wellenkörpers (703) mit dem antreibenden Drehteller-Sekundärrad verbunden ist.

7. Antriebsstruktur eines Tischroboterarms nach Anspruch 6, die ferner eine Vielzahl von ersten Stellschrauben und einen ersten Spannmechanismus (90) umfasst, wobei
die Trennplatte (11) mit einer Vielzahl von ersten Langlöchern (111) versehen ist und die ersten Stellschrauben durch die ersten Langlöcher (111) fest mit der Montagehülse (701) verbunden sind; und
der erste Spannmechanismus (90) einen ersten Bügel (901) und einen ersten Drehbolzen (902) umfasst, wobei der erste Bügel (901) mit einem ersten Verbindungsende und einem ersten Gewindeende versehen ist, und der erste Spannmechanismus (90) durch das erste Verbindungsende fest mit der Trennplatte (11) verbunden ist; der erste Spannmechanismus (90) unterhalb der Trennplatte (11) angeordnet ist, der erste Drehbolzen (902) drehbar mit dem ersten Gewindeende verbunden ist, und ein Schraubenkopf des ersten Drehbolzens (902) in der Nähe der Montagehülse (701) angeordnet ist.

8. Antriebsstruktur eines Tischroboterarms nach Anspruch 5, wobei das angetriebene Drehteller-Sekundärrad (722) lösbar mit dem Verbindungsabschnitt (43) verbunden ist, und das angetriebene Drehteller-Sekundärrad (722) mit einer Anschlagstruktur (100) versehen ist, die ringförmig an den Verbindungsabschnitt (43) angepasst ist; wenn das angetriebene Drehteller-Sekundärrad (722) fest mit dem Verbindungsabschnitt (43) verbunden ist, die Anschlagstruktur (100) gegen einen unteren Rand des Innenrings des Axiallagers (30) anliegt, und das angetriebene Drehteller-Sekundärrad (722) mit einer Verbindungsstruktur (200) versehen ist, die eine Vielzahl von Gewindedurchgangslöchern ist, und der Verbindungsabschnitt (43) mit Gewindelöchern versehen ist, die mit der Vielzahl von Gewindedurchgangslöchern zusammenpassen.

9. Antriebsstruktur eines Tischroboterarms nach Anspruch 4, die ferner eine Vielzahl von zweiten Stellschrauben und einen zweiten Spannmechanismus (400) umfasst, wobei
die Trennplatte (11) mit einer Vielzahl von zweiten Langlöchern (112) versehen ist und die zweiten Stellschrauben durch die zweiten Langlöcher (112) fest mit dem Drehtellerantriebsmotor (3) verbunden sind; und
der zweite Spannmechanismus (400) einen zweiten Bügel und einen zweiten Drehbolzen umfasst, wobei der zweite Bügel mit einem zweiten Verbindungsende und einem zweiten Gewindeende versehen ist, und der zweite Spannmechanismus (400) durch das zweite Verbindungsende fest mit der Trennplatte (11) verbunden ist; der zweite Spannmechanismus (400) unterhalb der Trennplatte (11) angeordnet ist, der zweite Drehbolzen drehbar mit dem zweiten Gewindeende verbunden ist, und ein Schraubenkopf des zweiten Drehbolzens in der Nähe des Drehteller-Antriebsmotors (3) angeordnet ist.

10. Antriebsstruktur eines Tischroboterarms nach Anspruch 3, wobei der Oberarm-Antriebsmotor (5) und der Vorderarm-Antriebsmotor (6) übereinander angeordnet sind, und die Oberarm-Verzögerungsbaugruppe (8) und die Vorderarm-Verzögerungsbaugruppe (9) jeweils an der linken und rechten Außenseite des Fundaments (21) angeordnet sind;
die Oberarm-Verzögerungsbaugruppe (8) ferner eine Oberarm-Übertragungswelle (83) und eine Oberarm-Antriebswelle (84) umfasst, wobei die Oberarm-Antriebswelle (84) oberhalb der Oberarm-Übertragungswelle (83) angeordnet ist, das Oberarm-Primärsynchronriemenrad (81) zwischen einer Ausgangswelle des Oberarm-Antriebsmotors (5) und der Oberarm-Übertragungswelle (83) angeordnet ist und das Oberarm-Sekundärsynchronriemenrad (82) zwischen der Oberarm-Übertragungswelle (83) und der Oberarm-Antriebswelle (84) angeordnet ist; und
die Vörderarm-Verzögerungsbaugruppe (9) ferner eine Vorderarm-Übertragungswelle (93) und eine Vorderarm-Antriebswelle (94) umfasst, wobei die Vorderarm-Antriebswelle (94) oberhalb der Vorderarm-Übertragungswelle (93) angeordnet ist, das Vorderarm-Primärsynchronriemenrad (91) zwischen einer Ausgangswelle des Vorderarm-Antriebsmotors (6) und der Vorderarm-Übertragungswelle (93) angeordnet ist, und das Vorderarm-Sekundärsynchronriemenrad (92) zwischen der Vorderarm-Übertragungswelle (93) und der Vorderarm-Antriebswelle (94) angeordnet ist.

11. Antriebsstruktur eines Tischroboterarms nach Anspruch 10, wobei der Absolutwertgeber des Oberarm-Antriebsmotors (5) ein Singletum-Absolutwertgeber ist, der ein erstes ringförmiges Kodierrad (5A) und einen ersten Detektor (5B) umfasst, das erste ringförmige Kodierrad (5A) koaxial auf der Oberarm-Antriebswelle (84) montiert ist, und der erste Detektor (5B) gegenüber dem ersten ringförmigen Kodierrad (5A) angeordnet ist; und
der Absolutwertgeber des Vorderarm-Antriebsmotors (6) ein Singletum-Absolutwertgeber ist, der ein zweites ringförmiges Kodierrad (6A) und einen zweiten Detektor (6B) umfasst; das zweite ringförmige Kodierrad (6A) koaxial auf der Vorderarmantriebswelle (94) montiert ist, und der zweite Detektor (6B) gegenüber dem zweiten ringförmigen Kodierrad (6A) angeordnet ist.

12. Antriebsstruktur eines Tischroboterarms nach Anspruch 10, wobei das Oberarm-Primärsynchronriemenrad (81) ein antreibendes Oberarm-Primärrad (811), ein angetriebenes Oberarm-Primärrad (812), und einen Oberarm-Primärsynchronriemen (813) umfasst, und das Oberarm-Sekundärsynchronriemenrad (82) ein antreibendes Oberarm-Sekundärrad (821), ein angetriebenes Oberarm-Sekundärrad (822), und einen Oberarm-Sekundärsynchronriemen (823) umfasst;
das antreibende Oberarm-Primärrad (811) auf der Ausgangswelle des Oberarm-Antriebsmotors (5) angeordnet ist, das angetriebene Oberarm-Primärrad (812) auf der Oberarm-Übertragungswelle (83) angeordnet ist, und der Oberarm-Primärsynchronriemen (813) auf dem antreibenden Oberarm-Primärrad (811) und dem angetriebenen Oberarm-Primärrad (812) angeordnet ist; das antreibende Oberarm-Sekundärrad (821) auf der Oberarm-Übertragungswelle (83) angeordnet ist, das angetriebene Oberarm-Sekundärrad (822) auf der Oberarm-Antriebswelle (84) angeordnet ist, und der Oberarm-Sekundärsynchronriemen (823) auf dem antreibenden Oberarm-Sekundärrad (821) und dem angetriebenen Oberarm-Sekundärrad (822) angeordnet ist;
das Vorderarm-Primärsynchronriemenrad (91) ein antreibendes Vorderarm-Primärrad (911), ein angetriebenes Vorderarm-Primärrad (912), und einen Vorderarm-Primärsynchronriemen (913) umfasst, und das Vorderarm-Sekundärsynchronriemenrad (92) ein antreibendes Vorderarm-Sekundärrad (921), ein angetriebenes Vorderarm-Sekundärrad (922), und einen Vorderarm-Sekundärsynchronriemen (923) umfasst; und
das antreibende Vorderarm-Primärrad (911) auf der Ausgangswelle des Vorderarm-Antriebsmotors (6) angeordnet ist; das angetriebene Vorderarm-Primärrad (912) auf der Vorderarm-Übertragungswelle (93) angeordnet ist; der Vorderarm-Primärsynchronriemen (913) auf dem antreibenden Vorderarm-Primärrad (911) und dem angetriebenen Vorderarm-Primärrad (912) angeordnet ist; das antreibende Vorderarm-Sekundärrad (921) auf der Vorderarm-Übertragungswelle (93) angeordnet ist; das angetriebene Vorderarm-Sekundärrad (922) auf der Vorderarm-Antriebswelle (94) angeordnet ist, und der Vorderarm-Sekundärsynchronriemen (923) auf dem antreibenden Vorderarm-Sekundärrad (921) und dem angetriebenen Vorderarm-Sekundärrad (922) angeordnet ist.

13. Antriebsstruktur eines Tischroboterarms nach Anspruch 12, wobei das Fundament (21) umfasst: eine Grundplatte (211), und ein erstes Stützelement (212) und ein zweites Stützelement (213); wobei das erste Stützelement (212) und das zweite Stützelement (213) gegenüberliegend auf der Grundplatte (211) angeordnet sind; das erste Stützelement (212) mit einer ersten Befestigungsbasis (212A) versehen ist und das zweite Stützelement (213) mit einer zweiten Befestigungsbasis (213A) versehen ist;
das antreibende Oberarm-Primärrad (811) an einem Ende der Ausgangswelle des Oberarm-Antriebsmotors (5) angeordnet ist, um einen ersten leeren Abschnitt (51) zwischen dem antreibenden Oberarm-Primärrad (811) und der ersten Befestigungsbasis (212A) auf der Ausgangswelle des Oberarm-Antriebsmotors (5) zu bilden;
das antreibende Vorderarm-Primärrad (911) an einem Ende der Ausgangswelle des Vorderarm-Antriebsmotors (6) angeordnet ist, um einen zweiten leeren Abschnitt (52) zwischen dem antreibenden Vorderarm-Primärrad (911) und der zweiten Befestigungsbasis (213A) auf der Ausgangswelle des Vorderarm-Antriebsmotors (6) zu bilden;
die erste Befestigungsbasis (212A) auf der dem zweiten Stützelement (213) gegenüberliegenden Seite vorsteht, und die zweite Befestigungsbasis (213A) auf der dem ersten Stützelement (212) gegenüberliegenden Seite vorsteht;
die Oberarm-Übertragungswelle (83) an ihrem Ende einen ersten Befestigungsabschnitt (831) aufweist; das antreibende Oberarm-Sekundärrad (821) auf dem ersten Befestigungsabschnitt (831) angeordnet ist; ein mittlerer Bereich des angetriebenen Oberarm-Primärrades (812) mit einem ersten Gewindedurchgangsloch versehen ist, und eine Endfläche der Oberarm-Übertragungswelle (83) mit einem ersten Gewindeloch versehen ist, das mit dem ersten Gewindedurchgangsloch zusammenpasst;
die Vorderarm-Übertragungswelle (93) an ihrem Ende einen zweiten Befestigungsabschnitt (931) aufweist; das antreibende Vorderarm-Sekundärrad (921) auf dem zweiten Befestigungsabschnitt (931) angeordnet ist; ein mittlerer Bereich des angetriebenen Vorderarm-Primärrad (912) mit einem zweiten Gewindedurchgangsloch versehen ist, und eine Endfläche der Vorderarm-Übertragungswelle (93) mit einem zweiten Gewindeloch versehen ist, das mit dem zweiten Gewindedurchgangsloch zusammenpasst;
das erste Stützelement (212) mit einem ersten Durchgangsloch, einem ersten Halter (214), der entsprechend dem ersten Durchgangsloch angeordnet ist, und zwei ersten Lager (215) versehen ist, die auf dem ersten Halter (214) angeordnet sind; ein erstes Lagerbefestigungsloch in dem ersten Halter (214) ausgebildet ist; die zwei ersten Lager (215) in dem ersten Lagerbefestigungsloch in einem beabstandeten Modus angeordnet sind; die Oberarm-Übertragungswelle (83) durch das erste Durchgangsloch hindurchgeht; die Oberarm-Übertragungswelle (83) ferner einen ersten Verbindungsabschnitt umfasst, der eine Presspassung mit Innenringen der zwei ersten Lager (215) bildet, und der erste Verbindungsabschnitt mit einer ersten Wellenhülse versehen ist, die zwischen den zwei ersten Lager (215) angeordnet ist; und
das zweite Stützelement (213) mit einem zweiten Durchgangsloch, einem zweiten Halter (217), der entsprechend dem zweiten Durchgangsloch angeordnet ist, und zwei zweiten Lager (218) versehen ist, die an dem zweiten Halter (217) angeordnet sind; ein zweites Lagerbefestigungsloch in dem zweiten Halter (217) ausgebildet ist; die zwei zweiten Lager (218) in dem zweiten Lagerbefestigungsloch in einem beabstandeten Modus angeordnet sind; die Vorderarm-Übertragungswelle (93) durch das zweite Durchgangsloch hindurchgeht; die Vorderarm-Übertragungswelle (93) ferner einen zweiten Verbindungsabschnitt umfasst, der eine Presspassung mit Innenringen der zwei zweiten Lager (218) bildet, und der zweite Verbindungsabschnitt mit einer zweiten Wellenhülse (219) versehen ist, die zwischen den zwei zweiten Lager (218) angeordnet ist.

14. Tischroboterarm, **dadurch gekennzeichnet, dass** der Tischroboterarm die Antriebsstruktur nach Anspruch 1 umfasst.

15. Roboter, **dadurch gekennzeichnet, dass** der Roboter den Tischroboterarm nach Anspruch 14 umfasst.

## Revendications

1. Structure d'entraînement d'un bras robotique de bureau, comprenant un siège (1) et une table tournante (2), dans laquelle
le siège (1) est pourvue à l'intérieur d'un moteur d'entraînement de table tournante (3) et d'un arbre d'entraînement de table tournante (4), le moteur d'entraînement de table tournante (3) est relié par entraînement à l'arbre d'entraînement de table tournante (4), l'arbre d'entraînement de table tournante (4) est relié à la table tournante (2), la table tournante (2) est pourvue d'un moteur d'entraînement de bras supérieur (5) et d'un moteur d'entraînement de bras avant (6), et le moteur d'entraînement de table tournante (3), le moteur d'entraînement de bras supérieur (5) et le moteur d'entraînement de bras avant (6) sont tous des servomoteurs ;
la table tournante (2) comprend une base (21), et le moteur d'entraînement de bras supérieur (5) et le moteur d'entraînement de bras avant (6) sont disposés sur un côté arrière de la base (21) ;
un ensemble de décélération de bras supérieur (8), qui est relié par entraînement au moteur d'entraînement de bras supérieur (5) ; et
un ensemble de décélération de bras avant (9), qui est relié par entraînement au moteur d'entraînement de bras avant (6) ; **caractérisé en ce que** les servomoteurs sont tous des servomoteurs ayant des codeurs de valeurs absolues,
l'ensemble de décélération de bras supérieur (8) comprend une roue à courroie synchrone primaire de bras supérieur (81) et une roue à courroie synchrone secondaire de bras supérieur (82) disposées entre la base (21) et la roue à courroie synchrone primaire de bras supérieur (81), et
l'ensemble de décélération de bras avant (9) comprend une roue à courroie synchrone primaire de bras avant (91) et une roue à courroie synchrone secondaire de bras avant (92) disposées entre la base (21) et la roue à courroie synchrone primaire de bras avant (91).

2. Structure d'entraînement d'un bras robotique de bureau selon la revendication 1, **caractérisée en ce que**,
le siège (1) ou la table tournante (2) est pourvu d'une batterie ou d'un compartiment de batteries relié électriquement aux codeurs de valeur absolue du moteur d'entraînement de bras supérieur (5) et du moteur d'entraînement de bras avant (6), ou d'un terminal ou d'un port de connexion de la batterie ;
une batterie ou un compartiment de batteries, qui est relié électriquement au codeur de valeur absolue du moteur d'entraînement de table tournante (3), ou un terminal ou un port de connexion de la batterie, qui est prévu sur le siège (1) ou sur la table tournante (2) ;
les codeurs de valeur absolue du moteur d'entraînement de table tournante (3), le moteur d'entraînement de bras supérieur (5) et le moteur d'entraînement de bras avant (6) sont tous des codeurs de valeur absolue à multi-tour ; et
le moteur d'entraînement de bras supérieur (5) et le moteur d'entraînement de bras avant (6) sont pourvus chacun d'un frein à contraction électromagnétique pour le freinage en cas de panne.

3. Structure d'entraînement d'un bras robotique de bureau selon la revendication 1, **caractérisée en ce que** l'arbre d'entraînement de table tournante (4) est disposé dans une zone centrale du siège (1), et que le moteur d'entraînement de table tournante (3) est disposé autour de l'arbre d'entraînement de table tournante (4) de manière décalée
un ensemble de décélération de table tournante (7), le moteur d'entraînement de table tournante (3) étant relié par entraînement à l'arbre d'entraînement de table tournante (4) par l'intermédiaire de l'ensemble de décélération de table tournante (7) ;
l'ensemble de décélération de table tournante (7) comprend une roue à courroie synchrone primaire de table tournante (71) et une roue à courroie synchrone secondaire de table tournante (72) ; et
une extrémité de la roue à courroie synchrone primaire de table tournante (71) est reliée par entraînement au moteur d'entraînement de table tournante (3), l'autre extrémité est reliée par entraînement à une extrémité de la roue à courroie synchrone secondaire de table tournante (72) et l'autre extrémité de la roue à courroie synchrone secondaire de table tournante (72) est reliée par entraînement à l'arbre d'entraînement de table tournante (4).

4. Structure d'entraînement d'un bras robotique de bureau selon la revendication 3, **caractérisée en ce qu'**une plaque de séparation (11) s'étendant dans une direction horizontale est prévue dans le siège (1), la roue à courroie synchrone primaire de table tournante (71) est disposée sur une surface supérieure de la plaque de séparation (11), le moteur d'entraînement de table tournante (3) est disposé sous une surface inférieure de la plaque de séparation (11), un arbre de sortie du moteur d'entraînement de table tournante (3) passe à travers la plaque de séparation (11) pour être relié par entraînement à une extrémité de la roue à courroie synchrone primaire de table tournante (71), et la roue à courroie synchrone secondaire de table tournante (72) est disposée sur la surface inférieure de la plaque de séparation (11) ;
l'arbre d'entraînement de table tournante (4) est disposé sur la plaque de séparation (11) par l'intermédiaire d'un palier de butée (30) ;
la plaque de séparation (11) est pourvue d'une cavité de réception (40), la cavité de réception (40) est pourvue d'une structure de réception (50) correspondant à un bord inférieur d'une bague extérieure du palier de butée (30), le palier de butée (30) est disposé dans la cavité de réception (40) et le bord inférieur de la bague extérieure du palier de butée (30) est relié à la structure de réception (50) ; l'arbre d'entraînement de table tournante (4) est inséré verticalement dans une bague intérieure du palier de butée (30), et l'arbre d'entraînement de table tournante (4) est pourvu d'une section de support (41), d'une section d'insertion (42) et d'une section de liaison (43) ; et la section de support (41) s'appuie contre un bord supérieur de la bague intérieure du palier de butée (30), la section d'insertion (42) s'appuie contre la bague intérieure du palier de butée (30), et la section de liaison (43) est reliée par entraînement à la roue à courroie synchrone secondaire de table tournante (72) ; et
une plaque de pression de palier (60), qui est creuse et en forme annulaire, est disposée sur le palier de butée (30), s'appuie contre la bague extérieure du palier de butée (30) et est fixée à la plaque de séparation (11).

5. Structure d'entraînement d'un bras robotique de bureau selon la revendication 4, **caractérisée en ce que** la roue à courroie synchrone primaire de table tournante (71) comprend une roue d'entraînement primaire de table tournante (711), une roue entraînée primaire de table tournante (712) et une courroie synchrone primaire de table tournante (713), et la roue d'entraînement primaire de table tournante (711) est reliée par entraînement à la roue entraînée primaire de table tournante (712) par l'intermédiaire de la courroie synchrone primaire de table tournante (713) ; et
la roue à courroie synchrone secondaire de table tournante (72) comprend une roue d'entraînement secondaire de table tournante (721), une roue entraînée secondaire de table tournante (722) et une courroie synchrone secondaire de table tournante (711), et la roue d'entraînement secondaire de table tournante (721) est reliée par entraînement à la roue entraînée secondaire de table tournante (722) par l'intermédiaire de la courroie synchrone secondaire de table tournante (711).

6. Structure d'entraînement d'un bras robotique de bureau selon la revendication 5, **caractérisée en ce que** le siège (1) comprend en outre un arbre de transmission de table tournante (70) et que la plaque de séparation (11) est pourvue d'un trou d'arbre à travers lequel passe l'arbre de transmission de table tournante (70) ; et l'arbre de transmission de table tournante (70) comprend un manchon de montage (701), deux paliers (702) et un corps d'arbre (703), les deux paliers (702) sont respectivement disposés à deux extrémités du manchon de montage (701) par un ajustement sans jeu, le corps d'arbre (703) est disposé dans le manchon de montage (701) et relié à bagues intérieures des deux paliers (702), une extrémité du corps d'arbre (703) est reliée à la roue entraînée primaire de table tournante (712) à travers le trou d'arbre, et l'autre extrémité est reliée à la roue d'entraînement secondaire de table tournante (721).

7. Structure d'entraînement d'un bras robotique de bureau selon la revendication 6, comprenant en outre une pluralité de premières vis de réglage et un premier mécanisme de tension (90), dans laquelle
la plaque de séparation (11) est pourvue d'une pluralité de premiers trous oblongs (111), et les premières vis de réglage sont reliées de manière fixe au manchon de montage (701) à travers les premiers trous oblongs (111) ; et
le premier mécanisme de tension (90) comprend un premier cadre (901) et un premier boulon de rotation (902), le premier cadre (901) est pourvu d'une première extrémité de liaison et d'une première extrémité filetée, et le premier mécanisme de tension (90) est relié de manière fixe à la plaque de séparation (11) par l'intermédiaire de la première extrémité de liaison ; le premier mécanisme de tension (90) est situé sous la plaque de séparation (11), le premier boulon de rotation (902) est relié de manière rotative à la première extrémité filetée et une tête de vis du premier boulon de rotation (902) est disposée proche du manchon de montage (701).

8. Structure d'entraînement d'un bras robotique de bureau selon la revendication 5, **caractérisée en ce que** la roue entraînée secondaire de table tournante (722) est reliée de manière amovible à la section de liaison (43) et que la roue d'entraînée secondaire de table tournante (722) est pourvue d'une structure d'aboutement (100), qui est configurée pour être en forme annulaire correspondant à la section de liaison (43) ; lorsque la roue d'entraînée secondaire de table tournante (722) est fixée à la section de liaison (43), la structure d'aboutement (100) s'appuie contre le bord inférieur de la bague intérieure du palier de butée (30) ; et la roue d'entraînée secondaire de table tournante (722) est pourvue d'une structure de liaison (200), qui est une pluralité de trous traversants filetés, et la section de liaison (43) est pourvue de trous filetés correspondant à la pluralité de trous traversants filetés.

9. Structure d'entraînement d'un bras robotique de bureau selon la revendication 4, comprenant en outre une pluralité de deuxièmes vis de réglage et un deuxième mécanisme de tension (400), dans laquelle
la plaque de séparation (11) est pourvue d'une pluralité de deuxièmes trous oblongs (112), et les deuxièmes vis de réglage sont reliées de manière fixe au moteur d'entraînement de table tournante (3) à travers les deuxièmes trous oblongs (112) ; et le deuxième mécanisme de tension (400) comprend un deuxième cadre et un deuxième boulon de rotation, le deuxième cadre est pourvu d'une deuxième extrémité de liaison et d'une deuxième extrémité filetée, et le deuxième mécanisme de tension (400) est relié de manière fixe à la plaque de séparation (11) par l'intermédiaire de la deuxième extrémité de liaison ; le deuxième mécanisme de tension (400) est situé sous la plaque de séparation (11), le deuxième boulon de rotation est relié de manière rotative à la deuxième extrémité filetée et une tête de vis du deuxième boulon de rotation est disposée proche du moteur d'entraînement de table tournante (3).

10. Structure d'entraînement d'un bras robotique de bureau selon la revendication 3, **caractérisée en ce que** le moteur d'entraînement de bras supérieur (5) et le moteur d'entraînement de bras avant (6) sont disposés l'un sur l'autre, et que l'ensemble de décélération de bras supérieur (8) et l'ensemble de décélération de bras avant (9) sont respectivement situés sur les côtés extérieurs gauche et droit de la base (21) ;
l'ensemble de décélération de bras supérieur (8) comprend en outre un arbre de transmission de bras supérieur (83) et un arbre d'entraînement de bras supérieur (84), l'arbre d'entraînement de bras supérieur (84) est situé au-dessus de l'arbre de transmission de bras supérieur (83), la roue à courroie synchrone primaire de bras supérieur (81) est située entre un arbre de sortie du moteur d'entraînement de bras supérieur (5) et l'arbre de transmission de bras supérieur (83), et la roue à courroie synchrone secondaire de bras supérieur (82) est située entre l'arbre de transmission de bras supérieur (83) et l'arbre d'entraînement de bras supérieur (84) ; et
l'ensemble de décélération de bras avant (9) comprend en outre un arbre de transmission de bras avant (93) et un arbre d'entraînement de bras avant (94), l'arbre d'entraînement de bras avant (94) est situé au-dessus de l'arbre de transmission de bras avant (93), la roue à courroie synchrone primaire de bras avant (91) est située entre un arbre de sortie du moteur d'entraînement de bras avant (6) et l'arbre de transmission de bras avant (93), et la roue à courroie synchrone secondaire de bras avant (92) est située entre l'arbre de transmission de bras avant (93) et l'arbre d'entraînement de bras avant (94).

11. Structure d'entraînement d'un bras robotique de bureau selon la revendication 10, **caractérisée en ce que** le codeur de valeur absolue du moteur d'entraînement de bras supérieur (5) est un codeur de valeur absolue à mono-tour, qui comprend une première roue de code annulaire (5A) et un premier détecteur (5B), la première roue de code annulaire (5A) est montée de manière coaxiale sur l'arbre d'entraînement de bras supérieur (84), et le premier détecteur (SB) est disposé à l'opposé de la première roue de code annulaire (5A) ; et
le codeur de valeur absolue du moteur d'entraînement de bras avant (6) est un codeur de valeur absolue à mono-tour, qui comprend une deuxième roue de code annulaire (6A) et un deuxième détecteur (6B), la deuxième roue de code annulaire (6A) est montée de manière coaxiale sur l'arbre d'entraînement de bras avant (94), et le deuxième détecteur (6B) est disposé à l'opposé de la deuxième roue de code annulaire (6A).

12. Structure d'entraînement d'un bras robotique de bureau selon la revendication 10, **caractérisée en ce que** la roue à courroie synchrone primaire de bras supérieur (81) comprend une roue d'entraînement primaire de bras supérieur (811), une roue d'entraînée primaire de bras supérieur (812) et une courroie synchrone primaire de bras supérieur (813), et la roue à courroie synchrone secondaire de bras supérieur (82) comprend une roue d'entraînement secondaire de bras supérieur (821), une roue d'entraînée secondaire de bras supérieur (822) et une courroie synchrone secondaire de bras supérieur (823) ;
la roue d'entraînement primaire de bras supérieur (811) est disposée sur l'arbre de sortie du moteur d'entraînement de bras supérieur (5), la roue d'entraînée primaire de bras supérieur (812) est disposée sur l'arbre de transmission de bras supérieur (83) et la courroie synchrone primaire de bras supérieur (813) est disposée sur la roue d'entraînement primaire de bras supérieur (811) et la roue d'entraînée primaire de bras supérieur (812) ; la roue d'entraînement secondaire de bras supérieur (821) est disposée sur l'arbre de transmission de bras supérieur (83), la roue d'entraînée secondaire de bras supérieur (822) est disposée sur l'arbre d'entraînement de bras supérieur (84) et la courroie synchrone secondaire de bras supérieur (823) est disposée sur la roue d'entraînement secondaire de bras supérieur (821) et la roue d'entraînée secondaire de bras supérieur (822) ;
la roue à courroie synchrone primaire de bras avant (91) comprend une roue d'entraînement primaire de bras avant (911), une roue d'entraînée primaire de bras avant (912) et une courroie synchrone primaire de bras avant (913), et la roue à courroie synchrone secondaire de bras avant (92) comprend une roue d'entraînement secondaire de bras avant (921), une roue d'entraînée secondaire de bras avant (922) et une courroie synchrone secondaire de bras avant (923) ; et
la roue d'entraînement primaire de bras avant (911) est disposée sur l'arbre de sortie du moteur d'entraînement de bras avant (6), la roue d'entraînée primaire de bras avant (912) est disposée sur l'arbre de transmission de bras avant (93), la courroie synchrone primaire de bras avant (913) est disposée sur la roue d'entraînement primaire de bras avant (911) et la roue d'entraînée primaire de bras avant (912), la roue d'entraînement secondaire de bras avant (921) est disposée sur l'arbre de transmission de bras avant (93), la roue d'entraînée secondaire de bras avant (922) est disposée sur l'arbre d'entraînement de bras avant (94), et la courroie synchrone secondaire de bras avant (923) est disposée sur la roue d'entraînement secondaire de bras avant (921) et la roue d'entraînée secondaire de bras avant (922).

13. Structure d'entraînement d'un bras robotique de bureau selon la revendication 12, **caractérisée en ce que** la base (21) comprend : une plaque de base (211) ; et un premier élément de support (212) et un deuxième élément de support (213), le premier élément de support (212) et le deuxième élément de support (213) étant disposés de manière opposée sur la plaque de base (211), le premier élément de support (212) étant pourvu d'une première base de montage (212A), et le deuxième élément de support (213) étant pourvu d'une deuxième base de montage (213A) ;
la roue d'entraînement primaire de bras supérieur (811) est disposée à une extrémité de l'arbre de sortie du moteur d'entraînement de bras supérieur (5) pour former une première section vide (51), entre la roue d'entraînement primaire du bras supérieur (811) et la première base de montage (212A), sur l'arbre de sortie du moteur d'entraînement de bras supérieur (5) ;
la roue d'entraînement primaire de bras avant (911) est disposée à une extrémité de l'arbre de sortie du moteur d'entraînement de bras avant (6) pour former une deuxième section vide (52), entre la roue d'entraînement primaire de bras avant (911) et la deuxième base de montage (213A), sur l'arbre de sortie du moteur d'entraînement de bras avant (6) ; et
la première base de montage (212A) fait saillie du côté à l'opposé du deuxième élément de support (213) et la deuxième base de montage (213A) fait saillie du côté à l'opposé du premier élément de support (212) ;
l'arbre de transmission de bras supérieur (83) comprend une première section de montage (831) située à son extrémité, la roue d'entraînement secondaire de bras supérieur (821) est située sur la première section de montage (831), une zone centrale de la roue d'entraînée primaire de bras supérieur (812) est pourvue d'un premier trou traversant fileté, et une face d'extrémité de l'arbre de transmission de bras supérieur (83) est pourvue d'un premier trou fileté correspondant au premier trou traversant fileté ; et
l'arbre de transmission de bras avant (93) comprend une deuxième section de montage (931) située à son extrémité, la roue d'entraînement secondaire de bras avant (921) est située sur la deuxième section de montage (931), une zone centrale de la roue d'entraînée primaire de bras avant (912) est pourvue d'un deuxième trou traversant fileté, et une face d'extrémité de l'arbre de transmission de bras avant (93) est pourvue d'un deuxième trou fileté correspondant au deuxième trou traversant fileté ;
le premier élément de support (212) est pourvu d'un premier trou traversant, d'un premier support (214) disposé pour correspondre au premier trou traversant et de deux premiers paliers (215) situés sur le premier support (214), un premier trou de montage de palier est formé dans le premier support (214), les deux premiers paliers (215) sont disposés dans le premier trou de montage de palier à l'intervalle, l'arbre de transmission de bras supérieur (83) passe à travers le premier trou traversant, l'arbre de transmission de bras supérieur (83) comprend en outre une première section de liaison formant un ajustement sans jeu avec les bagues intérieures des deux premiers paliers (215), et la première section de liaison est pourvue d'un premier manchon d'arbre situé entre les deux premiers paliers (215) ; et
le deuxième élément de support (213) est pourvu d'un deuxième trou traversant, d'un deuxième support (217) disposé pour correspondre au deuxième trou traversant et de deux deuxièmes paliers (218) situés sur le deuxième support (217), un deuxième trou de montage de palier est formé dans le deuxième support (217), les deux deuxièmes paliers (218) sont disposés dans le deuxième trou de montage de palier à l'intervalle, l'arbre de transmission de bras avant (93) passe à travers le deuxième trou traversant, l'arbre de transmission de bras avant (93) comprend en outre une deuxième section de liaison formant un ajustement sans jeu avec les bagues intérieures des deux deuxièmes paliers (218), et la deuxième section de liaison est pourvue d'un deuxième manchon d'arbre (219) situé entre les deux deuxièmes paliers (218).

14. Bras robotique de bureau, **caractérisé en ce que** le bras robotique de bureau comprend la structure d'entraînement d'un bras robotique de bureau selon la revendication 1.

15. Robot, **caractérisé en ce que** le robot comprend le bras robotique de bureau selon la revendication 14.
